(19) Europäisches Patentamt
European Patent Office
Office européen des brevets

(11) EP 2 565 572 A1

(12) EUROPÄISCHE PATENTANMELDUNG

(43) Veröffentlichungstag:
**06.03.2013 Patentblatt 2013/10**

(21) Anmeldenummer: **11179852.6**

(22) Anmeldetag: **02.09.2011**

(51) Int Cl.:
***F28D 7/00*** (2006.01) ***F28D 7/08*** (2006.01)
***F28F 13/08*** (2006.01) *F28D 7/02* (2006.01)
*F28D 7/10* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Aurotec GmbH**
**4840 Vöcklabruck (AT)**

(72) Erfinder:
- **Zikeli, Stefan**
  **4844 Regau (AT)**
- **Ecker, Friedrich**
  **4850 Timelkam (AT)**

(74) Vertreter: **Weinzinger, Philipp**
**Sonn & Partner Patentanwälte**
**Riemergasse 14**
**1010 Wien (AT)**

# (54) Wärmetauscherleitungsystem

(57) Die vorliegende Erfindung betrifft ein Wärmetauscherleitungssystem für den Transport von viskosen Fluiden mit einer Vielzahl von einzelnen Wärmetauschern als Leitungselemente und mit vorbestimmter kontrollierter Temperatur- und/oder Druckverteilung entlang des Leitungssystems sowie im Querschnitt der Leitungen, dadurch gekennzeichnet, dass in regelmäßigen Abständen des Leitungssystems Wärmetauscher als Leitungselemente vorgesehen werden, wobei die regelmäßigen Abstände derart gewählt werden um eine vorbestimmte Temperatur- und/oder Druckverteilung entlang des Leitungssystems einzuhalten, wobei in den Wärmetauschern Temperiermittel eines in der Wärmetauscherleitung transportierten viskosen Fluids vorgesehen sind, sowie optional Mischelemente um je nach Leitungsquerschnitt eine vorgegebene Temperatur- und/oder Druckverteilung im Querschnitt der Leitungen einzuhalten, und wobei mindestens 30% der Länge des Wärmetauscherleitungssystems mit Wärmetauschern bestückt ist, sowie Verfahren zum Transport viskoser Fluide durch Wärmetauscherleitungen.

Fig. 1

EP 2 565 572 A1

## Beschreibung

Die vorliegende Erfindung betrifft die Verwendung von Wärmetauschern beim Transport instabiler Fluide.

Leitungen zum Transport viskoser Medien wie beispielsweise heiß schmelzende Kunststoffe ("hot melts") sind z.B. aus der US 2009/0321975 bekannt. Hierin wird eine Anlage dargestellt, worin ein viskoses Polymer zu einem Extruder geführt wird. Die Polymerschmelze wird hierbei durch einen Wärmetauscher abgekühlt.

Ein Reaktor zur kontinuierlichen Durchführung einer Polymerisations-Reaktion in hochviskosen Medien wird in der EP 096 201 A1 beschrieben. Es wurde erkannt, dass der Energieaufwand beim Vermischen und der Wärmeübergang bei hoher Viskosität derart groß ist, sodass chemische Reaktionen während der Polymerisation beeinflusst werden können. Daher werden Mittel zur Abführung der Redaktionswärme und limitierte Mischzeiten zur Homogenisierung angestrebt. Hierzu wird der Reaktor mit einem Kühlmittel umströmt und statische Mischelemente im Inneren vorgesehen.

Statische Mischelemente sind weit verbreitet, wofür beispielsweise auf die Offenbarung der US 7,841,765 oder die WO 2009/000642 verwiesen wird.

Allerdings können nicht nur Polymerisationsreaktionen eine Abführung der Reaktionswärme erfordern. Auch Auflösungsvorgänge, Zwischenspeicherung von thermisch abbaubaren Polymeren und Polymerlösungen erfordern ein aktiv gesteuertes Temperaturmanagement, damit die gewünschten Produkte einerseits entsprechende Qualität aufweisen, andererseits oben angeführte Verfahrensschritte auch temperaturmäßig sicher geführt werden können. In letzter Zeit werden sehr viele Anstrengungen dahingehend unternommen, dass bioabbaubare Produkte wie zum Beispiel Cellulosefasern, hergestellt aus Spinnlösungen im industriellen Maßstab produziert werden können. Spinn- oder Extrusionslösungen können sowohl aus native Polymere (z. B. Cellulose und Cellulosederivate) als auch aus biobasierte Kunststoffe hergestellt werden, die durch umfassende chemische Veränderung der biogenen Rohstoffe erhalten wurden. Andererseits kann man unter der Bezeichnung Biopolymere von Lebewesen synthetisierte Polymere verstehen, welche in Form von Polysacchariden, Proteinen, Nukleinsäuren vorliegen. Solche Spinnlösungen können aus einer Mischung eines Biopolymers wie zum Beispiel Cellulose, eines Lösungsmittels, einer lösungsvermittelnden Komponente, sowie prozessnotwendigen Additiven (Stabilisatoren, Säuren, Laugen) und Produkteigenschaft verändernden Additiven bestehen. Eine entsprechende Darstellung solcher Cellulose-Aminoxid-Wasser Spinnlösungssysteme kann in der Publikation "Structure Formation of Regenerated Cellulose Materials from NMMO-Solutions (Prog. Polym. Sci. 26 (2001) 1473 -1524) entnommen werden.

Solche Polymerlösungen weisen in der Regel ein ausgeprägtes temperatur- und viskositätssensitives Verhalten auf, welchem in allen Prozessschritten beginnend bei der Lösungsherstellung, das heißt Auflösen des Polymers, über betriebsnotwendige Zwischenschritte, wie Fördern, Verteilen, Filtrieren, Wärmetausch, Zugabe von Additiven und Formgebung größte Aufmerksamkeit geschenkt werden muss. Die Publikation "Rheology of Concentrated N-Methylmorpholine-N-Oxide Cellulose Solutions (Polymer Science, Ser. A Vol 39, No.9 1997, pp 1033-1040) geht im Besonderen auf die Rheologie solcher Polymermassen ein.

In den vorgenannten Publikationen wird dargestellt, dass Temperatur- und Viskositätseinflüsse im Verarbeitungsprozess zu berücksichtigen sind. Entsprechende Untersuchungen belegen, dass der Verarbeitung zu geformten Produkten wie Stapelfasern, Filamenten, Folien, Formkörpern und Vliesstoffen größte Aufmerksamkeit geschenkt werden muss. Zur Herstellung von qualitativ hochwertigen Formprodukten werden höchste Anforderungen an die Qualität der Polymerlösung gestellt, da die Polymerlösung im Formgebungsprozess höchsten Belastungen ausgesetzt ist.

Neben den geforderten Qualitätskriterien der Polymerschmelze wie Temperatur- und Viskositätsgleichmäßigkeit, muss auch darauf geachtet werden, dass einerseits die Polymerlösungen thermisch homogen geführt werden und kein thermisch induzierter Abbau des Polymers (Cellulose), sowie des Lösungsmittels (Aminoxid) im NMMO-Prozess zur Herstellung von geformten Produkten erfolgt. Es ist bekannt, dass es bei zuvor genannten Cellulose Polymerlösungen bei gewissen Voraussetzungen zu autokatalytischen Abbaureaktionen kommen kann, die spontan auftreten können. Bei derartigen Reaktionen ist es auch erforderlich, dass die entstehende Reaktionswärme möglichst kontrolliert abgeführt werden kann.

Cellulose-Amionoxid-Wasser Polymerlösungen haben auch die Eigenschaft, dass sie sich unter Wärmeeinwirkung verfärben können. Diese Verfärbung kann Ausmaße annehmen, dass die Polymerlösung sich von honigfarben am Beginn der Lösungsherstellung über den Transportweg Richtung dunkelbraun bis schwarz verfärben kann. Diese Verfärbung wird durch die thermische Belastung des Polymers und des Lösungsmittels hervorgerufen. Eine stark verfärbte Polymerlösung führt dazu, dass das an den Verarbeitungspositionen hergestellte Endprodukt ebenfalls eine dunkelbraune Farbe annimmt und für den kommerziellen Vertrieb daher ungeeignet ist.

Alleine der Transport der hochviskosen Celluloselösung durch Rohrleitungen führt dazu, dass über den Druckwiderstand der Rohrleitung (1 bis 5 bar/m) Reibungswärme induziert und in die Polymermasse eingetragen wird.

Nachdem großtechnisch hergestellte Polymerlösungen oft Verunreinigungen aufweisen, werden bei der Herstellung von Polymerlösungen diese Verunreinigungen, z.B. Quellkörper, vor der Verarbeitung der Polymerlösung durch Filtrieren beseitigt. Bedingt durch die Filtration wird über das Filtermedium ein Druckverlust erzeugt, welcher zusätzliche Reibungswärme in der Polymermasse induziert. Um mit der hergestellten Polymerlösung an die einzelnen Verarbeitungspositionen zu gelangen, wird üblicherweise die Polymerlösung über Winkelstücke, T-Stücke, Y-Stücke, Mehrfachverteiler aufgeteilt, wodurch es zu einem weiteren Wärmeeintrag kommt.

Das Verschieben oder Fördern der hoch viskosen Polymerlösungen mittels Pumpen, wie zum Beispiel Zahnradpumpen, Extruder, Schneckenpumpen, Kanalpumpen, Kreiselpumpen, wird zusätzlich Reibungswärme induziert und in die viskositäts- und thermosensitive Celluloselösung eingetragen.

Nicht nur zuvor genannte Anlagenbauteile können Reibungswärme (Verlustleistung der Apparate) eintragen, sondern auch eingebaute Mischer, wie zum Beispiel Statikmischer, Rohrmischer, etc., was ebenfalls zu Friktionswärme führt.

Ein System zum Transport von Polymerlösungen, beginnend von der Lösungsherstellung, über Pumper, Filter, Verteilelemente hin zu Endverarbeitungsgeräten bedarf höchst komplexer Anlagensysteme, damit alle zuvor genannten Quellen der Friktionswärme aus der Polymerlösung am Ort des Entstehens ausgetragen werden können, damit eine Temperatur- und Viskositätsgleichmäßigkeit für die Verarbeitung der Polymerlösung unter Einhaltung höchster Sicherheitsstandards erreicht wird.

Das Ziel dieser Erfindung liegt darin, für die Verarbeitung von hoch viskosen Fluiden, insbesondere Polymerlösungen wie Zelluloselösungen, ein Transportsystem zu liefern, welches die notwendige thermische Sicherheit aufweist, damit Abbaureaktionen mit exothermer und/oder endothermer Wärmetönung sowie Verfärbungen unter Kontrolle gehalten werden können und das die Temperatur-und Viskositätshomogenität eingestellt werden kann.

Erfindungsgemäß wird ein Wärmetauscherleitungssystem zur Verfügung gestellt, welches für den Transport von viskosen Fluiden geeignet ist und eine Vielzahl von einzelnen Wärmetauschern als Leitungselemente aufweist, wobei mindestens 30% der Länge des Wärmetauscherleitungssystems mit Wärmetauschern bestückt ist. Das System ermöglicht eine vorbestimmte kontrollierte Temperatur-und/oder Druckverteilung entlang des Leitungssystems sowie im Querschnitt der Leitungen, z.B. durch Umschichtung des Fluides. In regelmäßigen Abständen des Leitungssystems werden Wärmetauscher als Leitungselemente vorgesehen, wobei die regelmäßigen Abstände derart gewählt werden um eine vorbestimmte Temperatur- und/oder Druckverteilung entlang des Leitungssystems einzuhalten. In den Wärmetauschern werden Temperiermittel vorgesehen um ein in der Wärmetauscherleitung transportiertes viskoses Fluid auf einer vorbestimmten Temperatur zu halten, sowie optional Mischelemente um je nach Leitungsquerschnitt eine vorgegebene Temperatur- und/oder Druckverteilung im Querschnitt der Leitungen um damit auch die Viskositätshomogenität einhalten zu können.

Rohrleitungen zum Transport von viskosen Fluiden sind bereits bekannt. In der WO 94/28213 A1 wird ein Rohr zum Transport viskoser Massen, nämlich einer Cellulose-NMMO (N- Methylmorpholin- N-Oxid) -Lösung, vorgeschlagen, in dem in der Rohrmitte und/oder an der Wand eines Rohrleistungsstücks gemäß den dort angegebenen Formeln das Fluid abgekühlt wird. Dazu wird ein Kühlmedium durch einen das Rohr umgebenden Kühlmantel geleitet. Das Kühlmedium leitet die Wärme von eventuell auftretenden exothermen Reaktionen aus dem Arbeitsfluid ab und kühlt den Außenbereich der Fluidströmung. Dadurch entstehen stark abweichende Temperaturunterschiede zwischen dem Fluid im Außenbereich und in der Rohrmitte, welche die physikalischen und chemischen Eigenschaften des Fluids negativ beeinflussen.

Die DE10024540 beschreibt ein Fluidleitungselement mit einem innenliegenden Kühlelement in Form eines konzentrischen Rohres. Auch hier können sich aufgrund der laminaren Strömung viskoser Fluide Temperaturgradienten im Querschnitt ausbilden.

Erfindungsgemäß wurde gefunden, dass abhängig von dem Innendurchmesser ein Mischelement, z.B. ein Statikmischer, notwendig sein kann um - je nach tolerierbarem Temperaturunterschied - die Temperaturverteilung im Querschnitt und damit die Viskositätskonstanz der Polymermasse in einer Leitung einzuhalten.

Zusätzlich zur Vermeidung von Temperaturgradienten im Wärmetauscherquerschnitt ist es ein Ziel auch im Längsverlauf der Wärmetauscherleitung eine konstante Temperatur zu erreichen. Daher werden im Wesentlichen entlang der gesamten Wärmetauscherleitung erfindungsgemäße Temperiermittel vorgesehen. "Im Wesentlichen" soll so verstanden werden, dass nicht auf exakt jedem Verlaufsabschnitt ein Temperiermittel vorhanden sein muss, es ist möglich kurze Strecken ohne Temperiermittel zu überbrücken ohne substantielle Einschränkungen der Fluidqualität und Sicherheit des Systems befürchten zu müssen. Eine Analyse des Viskositätsverlaufes und Temperaturverlaufs kann dazu herangezogen werden den örtlichen Einsatz des Temperiermittels zu bestimmen. Insbesondere Krümmungen oder andere technische Zwischenelemente, wie Filter, Überdruckentlastungsvorrichtungen, Pumpen, Verbindungsstükke, Flußteiler, Flußvereiniger, Entnahmeelemente, besondere messtechnische Geräte wie z.B. In-line Viskosimeter, Durchflussmesser oder Druckbehälter, können frei von den erfindungsgemäßen Temperiermittel sein. Vorzugsweise werden Verbindungsstücke mit statischen Mischern verwendet. Sofern an diesen Elementen Erhitzung vermieden werden soll, können gesonderte Kühlelemente innen oder außen vorgesehen werden.

Erfindungsgemäß wurde der kritische Anteil an Wärmetauschern (mit Temperiermittel) in einem Fluidleitungssystem mit mindestens 30% der Länge ermittelt, vorzugsweise sind mindestens 35%, insbesondere bevorzugt mindestens 40%, mindestens 45%, mindestens 50%, mindestens 55%, mindestens 60%, mindestens 65%, mindestens 70%, mindestens 75%, mindestens 80%, oder sogar mindestens 85%, mindestens 90%, mindestens 95%, der Länge des Wärmetauscherleitungssystems mit Wärmetauschern oder Temperiermittel bestückt. Ein Abschnitt mit einem Wärmetauscher wird als solcher Längsabschnitt des Leitungssystems bezeichnet, in dem ein Temperiermittel, wie z.B. Wärmeträgerleitungen, vorgesehen ist. Somit ist ein Großteil des Leitungssystems ein Wärmetauscher, daher wird dieser Aspekt der vorliegenden Erfindung auch als Wärmetauscherleitungssystem bezeichnet. Vorzugsweise wird in Abschnitten mindestens alle 8 m, alle 7m, alle 6m alle 5 m alle 4 m, oder alle 3 m ein Wärmetauscher im Wärmetauscherleitungssystem vorgesehen. In diesen Abschnitten von 8 m, 7m, 6m, 5 m, 4 m oder 3 m können mindestens 30% der Länge, vorzugsweise mindestens 35%, insbesondere bevorzugt mindestens 40%, mindestens 45%, mindestens 50%, mindestens 55%, mindestens 60%, mindestens 65%, mindestens 70%, mindestens 75%, mindestens 80%, oder sogar mindestens 85%, mindestens 90%, mindestens 95%, der Länge des Abschnitts mit Wärmetauschern oder Temperiermittel bestückt sein.

Das erfindungsgemäße System soll während des gesamten Transports eines Fluids von der Herstellung (z.B. Auflösung des Polymers unter Druck und / oder Vacuum, und Erwärmung der Spinnlösung auf Transporttemperatur, Unterdrucksetzen in beliebiger Reihenfolge) bis zur Endverarbeitung (bei Spinnmassen die Formgebung) die Temperatur und Druckverteilung homogenisieren.

Im Sinne einer sicheren Prozessführung ist es vorteilhaft, die spez. Wärmeabfuhrkapazität (Kilowatt je m Länge, Kilowatt je $m^2$ innerer Oberfläche) der Anlagenteile zu steuern. Als sicherheitstechnische Kennzahl dient neben den zuvor genannten Kennzahlen weiters die volumetrische Wärmestromdichte des Fluids in Kilowatt je $m^3$ Fluidvolumen des entsprechenden Anlagenteils.

Es ist daher wichtig, dass bei der Verarbeitung von thermisch sensitiven Fluiden und Polymeren die entsprechenden Anlagenkomponenten derart gestaltet sind, dass das darin enthaltene thermisch sensitive Fluid bzw. Polymer über ein aktiv geführtes Wärmemanagement auf einem sicheren Temperaturniveau aber auch einer sicheren Temperaturverteilung über die Querschnitte der entsprechenden Anlagenteile sowie der Länge des gesamten Systems nach geführt werden kann. Polymerschmelzen und Polymerlösungen weisen in der Regel strukturviskose Eigenschaften bei hohen Viskositätswerten auf, daher ist neben einem aktiv betriebenen Wärmemanagement auf eine hohe Homogenität des Polymerstroms zu achten, damit an allen Stellen der Anlage bzw. des Anlagenteils gleiche Temperatur- und Viskositätsprofile vorliegen. Wie oben ausgeführt, wird bei der Verarbeitung von Polymergemischen bestehend aus Cellulose, Wasser und Aminoxid ab dem Beginn der Lösungsherstellung bis zur Formgebung über mehrere Anlagenkomponenten Friktionswärme zugeführt was zu unkontrollierten und ungeregelten Temperatur- und Viskositätsprofilen und im Extremfall zu exothermen Reaktionen führt. Daher wird kontinuierlich das Fluid temperiert und umgeschichtet.

Das thermisch instabile Fluid bestehend aus Cellulose/NMMO/Wasser zersetzt sich bei ungenügender Stabilisierung autokatalytisch bereits ab Temperaturen von 120°C bis 130°C. Unter Stabilisierung des Fluids wird verstanden, dass dem Fluid bereits im Zuge der Polymermassenherstellung chemische Reagenzien zugesetzt werden die einerseits das Polymer und anderseits das Lösungsmittel vor thermischer Zersetzung schützen sollen. Eine weitere Zugabe der stabilisierenden Reagenzien kann auch im Zuge der Förderung der Polymermasse über die Wärmetaucherleitung zugegeben werden, speziell in Bereichen des Wärmetauschersystems in denen sich auch Mischelemente befinden. Neben der Zugabe von stabilisierenden Reagenzien können dem Wärmetauschersystem auch andere, produkteigenschaftsverändernde Substanzen zugegeben werden die im Status der Zugabe zu einer eventuellen Wärmetönung führen können. Das erfindungsgemäße Wärmetauschersystem kann daher exotherm oder endotherm auftretende Vorgänge sehr gut in dem gesamten Wärmetauschersystem ausgleichen. Es versteht sich, dass man mit dem Wärmetauschersystem neben der Zugabe von flüssigen Substanzen auch gasförmige Substanzen einführen kann. Durch das erfindungsgemäße Wärmetauscherleitungssystem werden übertemperierte Zonen, welche sich als Ausgangszonen für eine sich auf das ganze System ausbreitende exotherme Reaktion auswirken können, nicht gebildet.

In vorzugsweisen Ausführungsformen ist mindestens ein Temperiermittel eines Wärmetauschers eine Wärmeträgerleitung oder ein Wärmeträgermantel. Es ist möglich einzelne Wärmetauscher durch innenliegende Temperiermittel oder durch äußere Temperiermittel zu kühlen oder zu erwärmen. Ein Temperiermantel umgibt einen Abschnitt zumindest teilweise um an der Leitungswand Fluid zu erhitzen oder abzukühlen. Welche Temperiermöglichkeit für ein jeweiliges System optimal ist kann von einem Fachmann leicht berechnet werden, unter Berücksichtigung des Oberflächenverhältnisses der Temperiermittel und ev. der zusätzlichen Reibungswärme durch innenliegende Mischer und/oder Temperiermittel. Für ein Zellulose/NMMO/Wasser Fluid hat sich erfindungsgemäß herausgestellt, dass optimalerweise bis zu einem Innendurchmesser von 90 mm außengekühlte Wärmetauscher verwendet werden, ab einem Innendurchmesser von 135 mm optimalerweise innengekühlte Wärmetauscher und zwischen 90 mm und 135 mm innen- oder außengekühlte Wärmetauscher eingesetzt werden können. In besonderen Ausführungsformen enthält das Wärmetauscherleitungssystem einen Wärmetauscher mit einem Temperiermittel im Inneren des Wärmetauschers, vorzugsweise bei einem Innendurchmesser von mindestens 90 mm des Wärmetauschers. Unabhängig davon oder zusätzlich kann das Wärmetauscherleitungssystem einen Wärmetauscher enthalten mit einem Temperiermittel außerhalb des Innenraums des Wärmetauschers, vorzugsweise einem Temperiermantel, wobei vorzugsweise der Innendurchmesser des Wärmetauschers maximal 130 mm beträgt.

Das erfindungsgemäße Wärmetauscherleitungssystem kann aus mehreren Abschnitten bestehen in denen unterschiedlich dimensionierte Wärmetauscher zum Einsatz kommen. Insbesondere nach Verzweigungselementen kann ein Fluidstrom in zwei oder mehrere Ströme aufgeteilt werden, in denen üblicherweise Wärmetauscher mit geringerem Innendurchmesser verwendet werden. Daher betrifft die Erfindung ein Wärmetauscherleitungssystem mit einem gestaffelten Innendurchmesser einzelner Wärmetauscher, welcher im Verlauf des Leitungssystems reduziert wird.

Vorzugsweise weist das Wärmetauscherleitungssystem mindestens 1, 2, 3, 4, 5, 6 oder mehr Verzweigungselemente auf.

Die Staffelung der Innendurchmesser einzelner Abschnitte oder Wärmetauscher des erfindungsgemäßen Systems ist vorzugsweise in einem bestimmten Rahmen. So kann der Innendurchmesser von einem ersten Abschnitt des Wärmetauscherleitungssystems zu einem zweiten Abschnitt maximal 5:1 betragen, vorzugsweise mindestens 10:9 betragen, speziell bevorzugt 3:1 bis 6:5, insbesondere bevorzugt 2:1 bis 4:3. Im speziellen liegt dieses Verhältnis bei aufeinanderfolgenden Wärmetauschern oder Abschnitten, insbesondere nach Verteilelementen, vor. In besonderen Ausführungsformen können im System 1, 2, 3, 4, 5 oder 6 oder mehr derartige unterschiedlich gestaffelte Innendurchmesser vorliegen.

Vorzugsweise wird eine ausreichende Wärme entsprechend der volumenbezogenen Wärmestromdichte (KW/m$^3$) durch die einzelnen Wärmetauscher zur Regulierung des Temperatur- und Wärmemanagements abgeführt. Aus der volumenbezogenen Wärmestromdichte lassen sich die lineare Wärmestromdichte (KW/m) und die flächenbezogene Wärmestromdichte (KW/m$^2$) für den Fachmann leicht errechnen. Vorzugsweise ist die Wärmestromdichte bei Fluidleitungen mit einem Innendurchmesser von mindestens 250 mm mindestens 120 KW/m$^3$ oder mehr, vorzugsweise 263 KW/m$^3$, insbesondere bevorzugt 442 KW/m$^3$, oder 707 KW/m$^3$, oder mehr sofern auch Wärme anderer Teile des Wärmeleitungssystems wie Pumpen oder Filter abgeführt werden soll.

Vorzugsweise ist die Wärmestromdichte bei Fluidleitungen mit einem Innendurchmesser von mindestens 180 mm mindestens 40 KW/m$^3$ oder 80 KW/m$^3$ oder mehr, vorzugsweise 111 KW/m$^3$, insbesondere bevorzugt 188 KW/m$^3$, oder 300 KW/m$^3$, oder mehr sofern auch Wärme anderer Teile des Wärmeleitungssystems wie Pumpen oder Filter abgeführt werden soll.

Vorzugsweise ist die Wärmestromdichte bei Fluidleitungen mit einem Innendurchmesser von mindestens 140 mm mindestens 30 KW/m$^3$ oder mehr, vorzugsweise 80 KW/m$^3$, insbesondere bevorzugt 103 KW/m$^3$, oder 164 KW/m$^3$, oder mehr sofern auch Wärme anderer Teile des Wärmeleitungssystems wie Pumpen oder Filter abgeführt werden soll.

Vorzugsweise ist die Wärmestromdichte bei Fluidleitungen mit einem Innendurchmesser von mindestens 110 mm mindestens 12 KW/m$^3$ oder mehr, vorzugsweise 22 KW/m$^3$, insbesondere bevorzugt 75 KW/m$^3$, oder 120 KW/m$^3$, oder mehr sofern auch Wärme anderer Teile des Wärmeleitungssystems wie Pumpen oder Filter abgeführt werden soll.

Vorzugsweise ist die Wärmestromdichte bei Fluidleitungen mit einem Innendurchmesser von mindestens 90 mm mindestens 10 KW/m$^3$ oder mehr, vorzugsweise 12 KW/m$^3$, insbesondere bevorzugt 18 KW/m$^3$, oder 29 KW/m$^3$, oder mehr sofern auch Wärme anderer Teile des Wärmeleitungssystems wie Pumpen oder Filter abgeführt werden soll.

Vorzugsweise ist die Wärmestromdichte bei Fluidleitungen mit einem Innendurchmesser von mindestens 60 mm mindestens 10 KW/m$^3$ oder mehr, vorzugsweise 11 KW/m$^3$, insbesondere bevorzugt 17 KW/m$^3$, oder 28 KW/m$^3$, oder mehr sofern auch Wärme anderer Teile des Wärmeleitungssystems wie Pumpen oder Filter abgeführt werden soll.

In vorzugsweisen Ausführungsformen ergibt sich die mindestens abgeführte Wärmestromdichte (W1) in KW/m$^3$ aus folgender Formel

$$W1 = 0{,}0051 \times d^2 - 1{,}0468 \times d + 63{,}5,$$

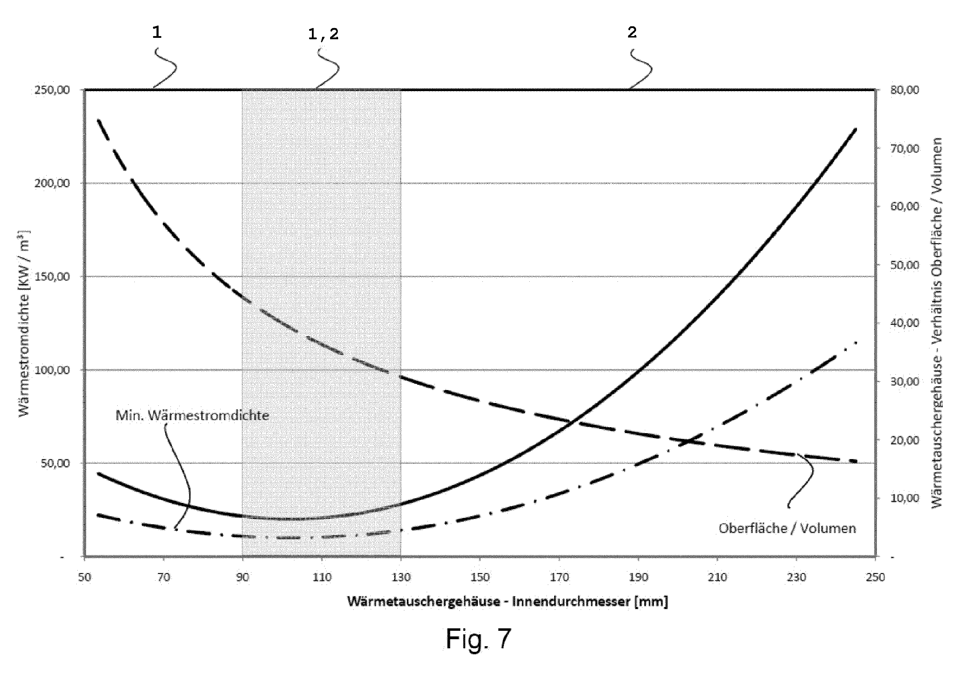

wobei d der Innendurchmesser des Wärmetauschers in mm ist (vgl. Fig. 7, punktierte Linie).

Vorzugsweise ist die optimal abgeführte Wärmestromdichte (W2) in KW / m$^3$
$W2 = 0{,}0102 \times d^2 - 2{,}0935 \times d + 127{,}07$ (vgl. Fig. 7, durchgezogene Linie). Die abgeführte Wärme kann in speziellen Ausführungsformen mindestens W1 mindestens die Hälfte von W2, mindestens den Durchschnitt von W1 und W2, oder mindestens % von W2 betragen.

Die abgeführte Wärme kann durch Wahl des Temperiermittels gesteuert werden. Im Fall von Wärmeträgermedien kann durch Wahl des Mediums und seiner Temperatur Wärme abgeführt werden. Als Wärmeträgermedien in den Wärmetauscherleitungen können Kaltwasser, Warmwasser, Kühlsole, Thermoöl oder andere Fluide in flüssiger oder gasförmiger Konsistenz eingesetzt werden.

Vorzugsweise betragen die vorbestimmten Temperaturunterschiede im Querschnitt und/oder in Längsrichtung des Wärmetauschersystems maximal 5°C, indem entsprechende Wärmetauscher mit angepasster Länge, Durchmesser und Temperierung gewählt werden. Vorzugsweise betragen die vorbestimmten Temperaturunterschiede im Querschnitt und/oder in Längsrichtung des Wärmetauschersystems maximal 4°C, maximal 3°C, maximal 2°C.

Das Wärmetauscherleitungssystem kann je nach Wunsch und Prozess- und Konstruktionserfordernis dimensioniert werden. Vorzugsweise ist das Wärmetauscherleitungssystem mindestens 1 m, vorzugsweise mindestens 2 m, vorzugsweise mindestens 4 m, vorzugsweise mindestens 6 m, vorzugsweise mindestens 8 m, vorzugsweise mindestens 10 m, mindestens 12 m, mindestens 14 m, mindestens 16 m lang.

Vorzugsweise ist das Wärmetauscherleitungssystem mit einer Pumpe zur Führung des viskosen Mediums unter Druck, einem Filter, einem Druck-und Volumenausgleichsbehälter, einem Überdruckregulator, dazwischengeschalteten Messgerätekomponenten oder Kombinationen oder Ähnlichem davon operativ verbunden. Das System soll insbesondere während das gesamten Transports des Fluids von der Herstellung bis zum Verbrauch wie hierin beschrieben entsprechend behandelt, umgeschichtet und temperiert bzw. kontrolliert werden. Ein solches System kann über Pumpen, Filter und/oder Überdruckregulatoren oder Ähnlichem geführt werden.

In besonders bevorzugten Ausführungsformen enthält das erfindungsgemäße Wärmetauscherleitungssystem Mischelemente im Innenraum zumindest eines Leitungsabschnitts oder Wärmetauschers. Wie bereits ausgeführt sind bevorzugt bei kleinen Innendurchmessern im Wärmetauscher innere Mischelemente und eine äußere Kühlung vorzusehen. Mischelemente dienen der Verwirbelung des Fluidstromes um eine laminare Strömung in eine turbulente zu überführen und/oder um einen Fluidaustausch von der Wärmetauschermitte zu den Querschnittsaußenbereichen zu erreichen. Vorzugsweise sind mindestens 30% der Länge, vorzugsweise sind mindestens 35%, insbesondere bevorzugst mindestens 40%, mindestens 45%, mindestens 50%, mindestens 55%, mindestens 60%, mindestens 65%, mindestens 70%, mindestens 75%, mindestens 80%, oder sogar mindestens 85%, mindestens 90%, mindestens 95%, des Wärmetauscherleitungssystems mit Mischern, insbesondere statischen Mischelementen bestückt. In Abschnitten mit einem Innendurchmesser von kleiner als 90 mm, vorzugsweise von kleiner als 130 mm, sind vorzugsweise mindestens 20% der Länge, vorzugsweise sind mindestens 30%, insbesondere bevorzugst mindestens 40%, mindestens 50%, mindestens 60%, mindestens 70%, mindestens 80%, oder sogar mindestens 90%, mindestens 95%, der Abschnitte oder der einzelnen Wärmetauscher mit Mischern, insbesondere statischen Mischelementen bestückt.

Auch in Abschnitten oder einzelnen Wärmetauschern mit Innentemperierung können Mischelemente vorgesehen werden, vorzugsweise haben die innenliegenden Temperierelemente gleichzeitig eine Mischfunktion inne. Gemäß dieser Ausführungsform betrifft die Erfindung ein Wärmetauscherleitungssystem das ein Mischelement als Temperiermittel z.B. in Form einer Wärmeträgerleitung im Inneren des Wärmetauschers hat. Dies kann beispielsweise durch entsprechend geformte Windungen einer Wärmeträgerleitung erfolgen. Vorzugsweise wird um Reibungswärme durch Druckverluste zu vermeiden eine geringe Packungsdichte gewählt, wie beispielsweise eine Packungsdichte von maximal bis zu 40% der Querschnittsinnenfläche, welche durch die Temperiermittel, insbesondere Wärmeträgerleitungen, eingenommen werden. In manchen Abschnitten des Wärmetauschersystems kann eine freie Querschnittsfläche von maximal 50 %, 65 %, 70 %, 75 % zielführend sein. Vorzugsweise ist die freie Querschnittsfläche zwischen 5 % und 80%, insbesondere bevorzugst zwischen 10 % und 70 %, zwischen 15 % und 60 %, zwischen 20 % und 50 %, zwischen 25 % und 45 %, oder zwischen 30 % und 40 %.

Die Erfindung liefert auch einen einzelnen Wärmetauscher mit entsprechender Packungsdichte für den Transport von viskosen Fluiden. Das erfindungsgemäße Wärmetauscherleitungssystem besteht vorzugsweise mindestens aus einem oder mehreren der wie folgt beschriebenen Wärmetauscher. Ein erfindungsgemäßer Wärmetauscher weist einen äußeren Mantel und eine oder mehrere innenliegende Wärmeträgerleitungen auf. Kennzeichnend für die Erfindung ist, dass die innenliegenden Wärmeträgerleitungen Führungsbereiche in Richtung des Mantels und gewundene Bereiche aufweisen oder die Wärmeträgerleitungen mindestens im Wesentlichen entlang der gesamten Länge des Wärmetauschers aufgenommen sind, insbesondere bei geringer Packungsdichte der Wärmeträgerleitungen.

Die Erfindung stellt einen Wärmetauscher zur Verfügung, welcher kontrollierte und konstante Bedingungen für den Transport von viskosen Fluiden schafft. So wird durch die erfindungsgemäßen gewundenen Bereiche eine gleichmäßigere Kühlung des transportierten Fluids über den Querschnitt des Wärmetauschers erzielt. Durch zusätzliche Aufnahme von Bereichen, in denen die Wärmeträgerleitungen in Richtung des Mantels geführt werden bzw. durch die geringe Packungsdichte damit großer freier Querschnittsfläche, wird sichergestellt, dass die Strömung des Fluids durch den Wärmetauscher nur minimal beeinträchtigt wird. Dies ist insbesondere bei viskosen Fluiden kritisch, da ansonsten hohe Reibungswärmen und Druckverluste auftreten. Durch diese unerwünschten Reaktionen können kann es bei thermisch instabilen Fluiden, wie beispielsweise Zellulose-tert. Aminoxid- Lösungen zu Explosionen kommen.

In den gewundenen Bereichen werden die Wärmeträgerleitungen über ein oder mehrere Krümmungen, Windungen oder Schlaufen geführt. Insbesondere bewerkstelligen die gewundenen Bereiche, dass die Wärmeträgerleitungen zwischen Randbereichen des Mantels des Wärmetauschers wechseln können. Vorzugsweise werden die Wärmeträgerleitungen im Wesentlichen vom Zentrum oder der Achse des Wärmetauschers versetzt geführt, wobei die gewundenen Bereiche einen Wechsel von einer Seite bzw. Randbereich zur anderen - nicht notwendigerweise auf entgegengesetzte Seiten - wechseln können - und eventuell wieder rückgeführt werden, bzw. auf eine weitere unterschiedliche Seite geführt werden können. Durch diese gewundenen Bereiche wird einerseits ein homogenerer Wärmetransfer bewerkstelligt; es ist auch möglich, dadurch eine turbulentere Strömung des Fluids einzurichten, welches weiters die Durchmischung fördert und die Bildung von Viskositäts- und Temperaturgradienten verhindert. Ein spezieller Vorteil liegt darin, dass durch die Verwendung der Wärmeträgerleitungen als Mischelemente am Ort des Auftretens von Reibungserwärmungen (Dissipationsenergie durch Druckverluste) durch den Pralldruck an den Leitungen unmittelbar diese Hitze abgeführt werden kann und eine Erhitzung isolierter Fluidbereiche von vornherein verhindert wird. Durch diese Maßnahmen wird ein konstantes Temperaturprofil des transportierten viskosen Fluids im Querschnitt des Wärmetauschers erzielt, und Orte lokaler Erhitzung ("hot spots") vermieden. Dies ist ein entscheidender Vorteil bei hoch viskosen Fluiden, welche beträchtliche Gegendrücke und in Folge Reibungswärme erzeugen können.

Erfindungsgemäß wird in Wärmeträgerleitungen ein Kühlmedium während des Betriebs geführt. "Wärmeträgerleitungen" soll jedoch nicht auf diese Verwendung eingeschränkt verstanden werden, es ist auch möglich, Wärmemedien oder Temperiermedien in anderen Ausführungsformen zu führen. Die Temperiermittel im Allgemeinen sowie die Wärmeträger können sowohl zum Kühlen als auch zum Beheizen des Fluids dienen, je nachdem, ob die Temperatur des Temperiermittels höher oder niedriger als die Temperatur des Fluids ist. Im Wärmetauscherleitungssystem kann die Temperatur der Temperiermittel auch so gesteuert sein, dass bestimmte Abschnitte des System als Kühlabschnitte und andere Abschnitte als Heizabschnitte wirken.

Unter "Bereichen" werden in der Regel hierin Regionen im Inneren der Wärmetauscher, welche zur Führung eines Fluids geeignet sind, verstanden. Meist handelt es sich hierbei um Leitungsbereiche. Unter "Leitungsbereich" wird hierin ein Abschnitt mit bestimmter Länge entlang des Wärmetauschers verstanden. "Randbereiche" sind begrenzte Querschnittsbereiche des Wärmetauschers an einem bestimmten Leitungsbereich in Nähe des äußeren Mantels.

Um den Wärmeübergang zwischen dem Wärmetauscher oder dem Wärmetauscherleitungssystem und seiner Umgebung möglichst gering zu halten, kann in einer weiteren vorteilhaften Ausgestaltung vorgesehen sein, dass der Wärmetauscher oder das System zumindest abschnittsweise von einer Wärmeisolationsschicht umhüllt ist. Dadurch lässt sich insbesondere eine gezieltere Temperaturkontrolle des Fluids im Inneren besser bewerkstelligen.

In bevorzugten Ausführungsformen werden mindestens zwei Wärmeträgerleitungen vorgesehen. Diese Wärmeträgerleitungen können zur Führung von Wärmeträgermedium in entgegengesetzte Richtung eingerichtet sein. Die mindestens zwei Wärmeträgerleitungen werden innerhalb des Mantels im Wärmetauscher geführt, z.B. zumindest bereichsweise parallel. So können beispielsweise die Abschnitte, in denen die Wärmeträgerleitungen entlang des Wärmetauschers, d.h. entlang des Mantels als nicht-gewundene Bereiche, geführt werden, in den gleichen Leitungsbereichen oder alternierend vorliegen. Vorzugsweise liegen die gewundenen Bereiche von mindestens zwei Wärmeträgerleitungen gemeinsam in einem begrenzten Leitungsabschnitt vor. Eine oder mehrere Wärmeträgerleitungen kann/können an einem endseitigen Bereich mit einer zweiten Wärmeträgerleitung zur Rückführung von Wärmeträgermedium in dieser zweiten Wärmeträgerleitungen verbunden sein. Durch den Rückfluss der Wärmeträgerleitungen können einfache Anschlussenden zur Zufuhr und Abfuhr in räumlicher Nähe ermöglicht werden. Zudem wird verhindert, dass durch Erwärmen des Kühlmediums während des Durchflusses durch den Wärmetauscher Temperaturgefälle entlang des Wärmetauschers entstehen. Dies ist insbesondere bei langen Wärmetauschern von z.B. mehreren Metern besonders vorteilhaft.

Die gewundenen Bereiche von mindestens zwei Wärmeträgerleitungen können zudem gemeinsam in einem begrenzten Leitungsabschnitt gegeneinander verschränkt vorliegen. Dies bewirkt eine besonders effiziente Durchmischung des Fluids und homogenen Wärmetransfer mit dem Kühlmedium. Durch die effiziente Vermischung durch die Wärmeträgerleitungen kann vorzugsweise auf weitere Mischelemente, inklusive statische Mischelemente, deren wesentliche Aufgabe es ist, eine turbulente Strömung zu bewirken - oft unter Erzeugung eines beträchtlichen Gegendrucks - entlang des Wärmetauschers verzichtet werden. Der Wärmetauscher kann daher in Abschnitten mit Wärmeträgerleitungen im Wesentlichen frei von zusätzlichen Mischelementen sein.

Im Speziellen werden die gewundenen Bereiche zur Verwirbelung des viskosen Fluids vorgesehen. Besondere Formen oder Verbindungen der Kühlmediumleitungen zur Steigerung der Turbulenz sind an sich bekannt und können hierzu eingesetzt werden.

Vorzugsweise werden im erfindungsgemäßen Wärmetauscherleitungssystem mindestens 1, 2, 3, 4, 5, 6, 7, 8, 9, 10, 11, 12 oder mehr einzelne Wärmetauscher wie hierin beschrieben oder anderweitig bekannt vorgesehen. Das erfindungsgemäße System zeichnet sich insbesondere durch die modulare Verwendung von einer Vielzahl an einzelnen Wärmetauschern aus.

In bevorzugten Ausführungsformen wird im Wärmetauscherleitungssystem eine oder mehrere Überdruckentlastungsvorrichtungen vorgesehen, vorzugsweise Überdruckentlastungsvorrichtungen basierend auf Berstelementen. Die Verwendung von Überdruckentlastungsvorrichtungen ist allgemein bekannt. Übliche Mittel umfassen beispielsweise Berstscheiben, welche eine Membran aufweisen, die unter Wirkung eines Drucks, der höher ist als der normale Betriebsdruck, aber geringer ist als der Druck, bei dem ein Rohr oder Gefäß selbst bricht, berstet, wodurch eine Druckentlastung mit einem Außenraum ermöglicht wird. Berstscheiben sind beispielsweise in der US 6, 241, 113, US 3, 845, 879, US 2008/0202595, EP 1 591 703 und der US 7, 870, 865 beschrieben. Manche Berstscheiben können Perforationen aufweisen, um ein Aufsprengen an mehreren Stellen oder entlang von Sollbruchstellen zu gewährleisten. Berstscheiben können in diversesten Vorrichtungen, welche versuchen, die Wirkung der Berstscheiben zu kontrollieren, eingesetzt werden. So beschreibt die US 4, 079, 854 eine Vorrichtung, welche eine Schneideinrichtung mit einem Messer, welches eine konkave Berstscheibe nach Druckeinwirkung aufreißt, aufweist. Die US 3,872,874 beschreibt eine Berstscheibenvorrichtung mit einer konvexen Berstscheibe, welche bei Druckausdehnung gegen einen Schneiddorn gepresst wird. Die WO 2005/054731 betrifft eine Berstscheibenanordnung mit einem Druckdetektor. Die EP 789 822 betrifft eine Drucksicherheitsvorrichtung für thermisch instabile viskose Massen, wie Cellulose NMMO (N-Methylmorpholin-N-oxid)-Lösungen, in der ein Berstelement in den Innenraum eines Transportrohres einragt. Die US 5,337,776 betrifft eine Rohrleitung mit einer Überdruckentlastungsvorrichtung, wobei eine Berstscheibe in der Innenseite der Wand des Rohres bündig liegt, damit ein Umspülen der Berstscheibe mit transportierter Flüssigkeit bewerkstelligt wird.

Vorzugsweise werden die Überdruckentlastungsvorrichtungen in Verbindungselementen zwischen Bereichen der einzelnen Wärmetauscher mit den Temperiermitteln vorgesehen. Erfindungsgemäß bewirken die Abschnitte mit Temperiermitteln eine äußerst effiziente Temperatur und in Verbindung damit Druckkontrolle des geführten Fluids, sodass in diesen Abschnitten keine Überdruckentlastungsvorrichtungen notwendig sind. Da die erfindungsgemäß mit Temperiermittel ausgestatteten Wärmetauscher eine äußerst effiziente Temperatur-und Viskositätshomogenisierung bilden, sollten bewusst in diesen Zonen der Einbau von Überdruckentlastungsvorrichtungen viermieden werden, da diese eine Kaltstelle im Wärmetauschersystem hervorrufen und damit das Wärmemangement der Wärmetauscherleitung empfindlich stören. Überdruckentlastungsvorrichtungen werden daher hauptsächlich an Verbindungselementen, in denen keine inneren Temperiermittel geführt werden, vorgesehen werden. Alternativ können Mischelemente in den Bereichen der Überdruckentlastungsvorrichtungen vorgesehen werden, damit diese Vorrichtungen mit homogenem Fluid kontaktiert werden. Die Überdruckentlastungsvorrichtungen können auch durch ein Temperiermittel temperiert sein.

Durch die erfindungsgemäßen Ausführungen eines Wärmetauscherleitungssystems können besonders lange Leitungen zur Verfügung gestellt werden, welche über die gesamte Länge eine Kühlung ermöglichen. Dies ist insbesondere beim Transport von hochviskosen Spinnlösungen relevant, bei denen mehrere Meter zwischen Reaktor und Extruder oder Ähnlichem überbrückt werden können. Beispielhafte Anlagen benötigen eine Leitung von ca. 20 Metern. Vorzugsweise werden lange Wärmetauscherleitungen von mindestens 1 m, vorzugsweise mindestens 2 m, mindestens 3 m, mindestens 4 m, mindestens 5 m, mindestens 6 m, mindestens 7 m, mindestens 8 m, mindestens 9 m, mindestens 10 m, mindestens 12 m, mindestens 15 m, Länge zur Verfügung gestellt. Entlang des Wärmetauscherleitungssystems können mehrere Wärmetauscher, d.h. Abschnitte mit eigenen, begrenzten Temperiermitteln, vorgesehen werden. Die Wärmeträgerleitungen einzelner Wärmetauscher können getrennt mit Kühlmedium bedient werden. Vorzugsweise enthält die Leitung 1, 2, 3, 4, 5, 6, 7, 8, 9, 10 oder mehr Wärmetauscher. Einzelne Wärmetauscher weisen die erfindungsgemäßen Wärmeträgerleitungen auf und können Dimensionen von 0,2 bis 4 m, vorzugsweise von 0,3 bis 3 m, speziell bevorzugt von 0,4 bis 2 m, insbesondere bevorzugt von 0,5 bis 1 m aufweisen. Das Wärmetauscherinnere einzelner Wärmetauscher ist vorzugsweise an beiden Enden offen und ermöglicht den Anschluss weiterer Wärmetauscher oder anderer Elemente, wie Verbindungsstücke, Flußteiler, Filter, Pumpen, Druckbehälter oder Endgeräte, wie Extruder, Spinnvorrichtungen.

Vorzugsweise werden die Wärmeträgerleitungen mindestens entlang 60%, speziell bevorzugt mindestens entlang 65%, mindestens entlang 70%, mindestens entlang 75%, mindestens entlang 80%, mindestens entlang 85%, mindestens entlang 90%, mindestens entlang 95%, der Länge eines oder mehrerer, insbesondere aller Wärmetauscher des erfindungsgemäßen Systems aufgenommen.

Das erfindungsgemäße Wärmetauscherleitungssystem wird vorzugsweise zusammen mit einer Pumpe zur Führung des viskosen Mediums unter Druck operativ verbunden. Besonders beim Transport von hochviskosen Fluiden, welche unter Druck durch die Wärmetauscher in das System gepresst werden, stellen sich die Vorteile der vorliegenden Erfindung besonders deutlich hervor.

Um möglichst geringen Gegendruck zu erzeugen, werden die viskosen Fluide mit möglichst geringem Widerstand durch die Wärmetauscher transportiert. Dazu wird die Packungsdichte der Temperiermittel reduziert. Insbesondere werden in bevorzugten Ausführungsformen im Querschnitt der Wärmetauscher maximal bis zu 50%, vorzugsweise bis zu 45%, bis zu 40%, bis zu 35%, bis zu 30%, bis zu 25%, bis zu 20%, bis zu 15%, bis zu 12%, bis zu 10%, bis zu 8%, bis zu 7%, bis zu 6%, bis zu 5%, der Querschnittsinnenfläche durch die Temperiermittel eingenommen. D.h. der freie Querschnitt ist der verbleibende Querschnittsanteil frei zum Durchfluss des Fluids und ist vorzugsweise mindestens 50%, speziell bevorzugt mindestens 55%, mindestens 60%, mindestens 65%, mindestens 70%, mindestens 75%, mindestens 80%, mindestens 85%, mindestens 90%.

Ein Wärmetauscher mit innerem Temperiermittel kann mehrere Bereiche mit gewundenen Wärmeträgerleitungen aufweisen. In nachfolgenden gewundenen Bereichen der Wärmeträgerleitungen sind vorzugsweise die Wärmeträgerleitungen zueinander in Querschnittsaufsicht verdreht oder verwinkelt. Die nachfolgenden gewundenen Bereiche können beispielsweise durch eine rückführende Wärmeträgerleitung bzw. durch eine Wärmeträgerleitung, in welcher das Kühlmedium in entgegengesetzter Richtung zu einer ersten Wärmeträgerleitung geführt wird, gebildet werden.

Die Wärmeträgerleitungen und/oder die Wärmetauscher können aus verschiedenen Materialien hergestellt sein, wie Stahl, Edelstahl, Keramik, Sintermetallen, Aluminium, Kunststoff, Buntmetallen oder Edelmetallen. Bevorzugte Werkstoffe sind alle Eisen, Eisenlegierungen, Chrom-Nickelstähle, Nickelstähle (z.B. Hastelloy Materialien), Titan, Tantal, Siliziumcarbid, Glas, Keramik, Gold, Platin und auch Kunststoffe. Spezielle Materialien sind Legierungen mit hohem Molybdängehalt bzw. Nickel, Chrom und Molybdän-Legierungen zur Beständigkeit gegen Lochfraß und Spaltkorrosion oder Nickel-Kupfer-Legierungen mit hoher Zugfestigkeit. Materialbeispiele sind Hastelloy C (hohe Korrosionsfestigkeit), Hastelloy B (ausscheidungshärtende Hochtemperaturlegierung), Inconel (Beständigkeit gegen Spannungskorrosionsrisse in petrochemischen Anwendungen), Incoloy (hohe Festigkeit als auch Beständigkeit gegen hohe Temperaturen und gegenüber Oxidierung und Aufkohlung), Monel (hohe Zugfestigkeit, beständig gegenüber Korrosion). Die Wärmeträgerleitungen und/oder die Wärmetauscher können aber auch aus beschichteten Materialien hergestellt sein.

Der Fachmann kann in Kenntnis der Korrosionsbeständigkeit der verwendeten Konstruktionsmaterialien für das Wärmetauchersystem gegenüber dem zu fördernden Fluids entscheiden welche Konstruktionsmaterialien verwendet werden können und wie das Wärmetauschersystem konstruktiv zu einer Anlageneinheit verbunden werden kann. Bei einem Wärmetauschersystem eingesetzt zu Temperatur-und Viskositätshomogenisierung der Polymermassen bestehend aus Cellulose, Aminoxid und Wasser, ist auf Eisen- und Buntmetallfreiheit zu achten.

Vorzugsweise wird ein Material mit einer Wärmeleitfähigkeit von 5 bis 100 W/mK, speziell bevorzugt von 10 bis 60 W/mK, gewählt.

In speziellen Ausführungsformen ist der Mantel eines Wärmetauschers isoliert und/oder kann als Doppelrohr vorgesehen werden, da der Wärmeaustauch im Inneren erfolgt und keine wesentlichen äußeren Wärmetransporte über den Mantel auftreten müssen.

Weiters betrifft die Erfindung ein Verfahren zum Transport eines viskosen Fluids durch ein erfindungsgemäßes Wärmetauscherleitungssystem oder einen erfindungsgemäßen Wärmetauscher. Ebenso betrifft die Erfindung die Verwendung des Wärmetauscherleitungssystems oder Wärmetauschers zum Transport eines viskosen Fluids. Vorzugsweise ist das viskose Fluid thermisch instabil. Thermisch instabile Fluide sind beispielsweise Biopolymerlösungen, Cellulose-Lösungen, wie Cellulose-Aminoxid-Lösungen, im Speziellen Lösungen von tertiären Aminoxid-Lösungen. Ein Beispiel ist eine Cellulose-NMMO-Lösung wie in der WO 94/28213 A1 beschrieben. Das Fluid kann eine wässrige Lösung sein. Thermisch instabile Fluide sind solche, bei denen die Gefahr einer Temperaturerhöhung während dem Transport durch die Wärmetauscher und das Anlagensystem besteht. Temperaturerhöhungen können z.B. aufgrund von exothermen Reaktionen, insbesondere chemischen Reaktionen, oder aufgrund von Reibungswärme beim Transport hochviskoser Fluide auftreten. Weitere Fluide sind insbesondere technische Kunststoffe, erstarrbare Fluide, insbesondere "hot-melts", wie Polymere, Polycarbonate, Polyester, Polyamide, Polymilchsäure, Polypropylen, etc. Das Fluid kann ein thixotropes Fluid, insbesondere eine Spinnlösung, sein. Spezielle Fluide haben eine Schmelztemperatur von mindestens ca. 40°C, mindestens 50°C, mindestens 55°C, mindestens 60°C, mindestens 65°C, mindestens 70°C, mindestens 75°C, können aber auch Schmelztemperaturen bis 280°C erreichen. Das Fluid kann bei beispielhaften Temperaturen von mindestens ca. 40°C, mindestens 50°C, mindestens 55°C, mindestens 60°C, mindestens 65°C, mindestens 70°C, mindestens 75°C, mindestens ca. 80°C, mindestens 85°C, mindestens 90°C, mindestens 95°C, geführt werden. Die vorliegende Erfindung kann verwendet werden, um die Wärme von exotherme Reaktionen oder Dissipationsenergie aufgrund von Reibung/Druckverlusten des viskosen Fluids abzuführen.

In bevorzugten Ausführungsformen wird ein Kühlmedium durch die Wärmeträgerleitung (innen oder außerhalb, z.B. im Mantel, eines Wärmetauschers) geführt, welches maximal 20 °C, vorzugsweise maximal 15 °C, maximal 12 °C, maximal 10 °C, maximal 9 °C, maximal 8 °C, maximal 7 °C, maximal 6 °C, maximal 5 °C, maximal 4 °C, maximal 3 °C, von der Temperatur des transportierten viskosen Fluids abweicht. Der erfindungsgemäße Wärmetauscher hat sich als derart effizient erwiesen, sodass geringe Temperaturunterschiede bei ausreichender Wärmeabführung möglich sind. Vorzugsweise ist die Temperatur des Kühlmediums geringer als die des Fluids. In speziellen Ausführungsformen werden viskose Fluide bei hohen Drücken von mindestens 15 bar, mindestens 20 bar, mindestens 25 bar, mindestens 100 bar, vorzugsweise mindestens 200 bar, mindestens 300 bar, mindestens 400 bar, mindestens 500 bar, mindestens 600 bar, mindestens 700 bar, mindestens 800 bar, Ausgangsdruck durch die Wärmetauscher oder das Leitungssystem transportiert. In weiteren Ausführungsformen ist das Wärmetauscherleitungssystem oder ein einzelner erfindungsgemäßer Wärmetauscher, bzw. die Überdruckvorrichtung für den Transport von Fluiden bei hohen Drücken bis maximal 1000 bar, vorzugsweise bis 60 bar, bis 80 bar, bis 120 bar, bis 250 bar, bis 350 bar, bis 450 bar, bis 550 bar, bis 650 bar, bis 750 bar, bis 900 bar, eingerichtet. Vorzugsweise ist die Nullscherviskosität des Fluids im Bereich von 100 bis 15.000 Pas, insbesondere zwischen 500 bis 10.000 Pas.

In vorzugsweisen Ausführungsformen wird die vorliegende Erfindung wie folgt definiert:

1. Wärmetauscherleitungssystem für den Transport von viskosen Fluiden mit einer Vielzahl, z.B. 2, 3, 4, 5, 6, 7, 8 oder mehr, von einzelnen Wärmetauschern als Leitungselemente und mit vorbestimmter kontrollierter Temperatur- und/oder Druckverteilung entlang des Leitungssystems sowie im Querschnitt der Leitungen, dadurch gekennzeichnet, dass in regelmäßigen Abständen des Leitungssystems Wärmetauscher als Leitungselemente vorgesehen werden, wobei die regelmäßigen Abstände derart gewählt werden um eine vorbestimmte Temperatur- und/oder Druckverteilung durch Umschichtung des Fluides entlang des Leitungssystems einzuhalten, wobei in den Wärmetauschern Temperiermittel für in der Wärmetauscherleitung transportierte viskose Fluide vorgesehen sind, sowie optional Mischelemente um je nach Leitungsquerschnitt eine vorgegebene Temperatur- und/oder Druckverteilung im Querschnitt der Leitungen einzuhalten, und wobei mindestens 30% der Länge des Wärmetauscherleitungssystems mit Wärmetauschern bestückt ist.

2. Wärmetauscherleitungssystem nach Definition 1, dadurch gekennzeichnet, dass mindestens ein Temperiermittel eines Wärmetauschers eine Wärmeträgerleitung oder ein Wärmeträgermantel ist.

3. Wärmetauscherleitungssystem nach Definition 1 oder 2 mit einem gestaffelten Innendurchmesser einzelner Wärmetauscher, welcher im Verlauf des Leitungssystems reduziert wird.

4. Wärmetauscherleitungssystem nach einer der Definitionen 1 bis 3, mit mindestens einem Verzweigungselement.

5. Wärmetauscherleitungssystem nach einer der Definitionen 1 bis 4 wobei der Innendurchmesser von einem ersten Abschnitt des Wärmetauscherleitungssystems zu einem zweiten Abschnitt maximal 5:1 beträgt, vorzugsweise mindestens 10:9 beträgt.

6. Wärmetauscherleitungssystem nach einer der Definitionen 1 bis 5, mit einem Wärmetauscher mit einem Temperiermittel im Inneren des Wärmetauschers, vorzugsweise bei einem Innendurchmesser von mindestens 90 mm des Wärmetauschers.

7. Wärmetauscherleitungssystem nach einer der Definitionen 1 bis 6, mit einem Wärmetauscher mit einem Temperiermittel außerhalb des Innenraums des Wärmetauschers, vorzugsweise einem Temperiermantel, wobei vorzugsweise der Innendurchmesser des Wärmetauschers maximal 130 mm beträgt.

8. Wärmetauscherleitungssystem nach einer der Definitionen 1 bis 7, dadurch gekennzeichnet, dass die vorbestimmten Temperaturunterschiede im Querschnitt und/oder in Längsrichtung des Wärmetauschersystems maximal 5°C betragen.

9. Wärmetauscherleitungssystem nach einer der Definitionen 1 bis 7 enthaltend Mischelemente im Innenraum zumindest eines Leitungsabschnitts.

10. Wärmetauscherleitungssystem nach Definition 6 und 9, wobei das Mischelement und Temperiermittel eine Wärmeträgerleitung im Inneren des Wärmetauschers ist.

11. Wärmetauscherleitungssystem nach Definition 10, dadurch gekennzeichnet, dass die innenliegende Wärmeträgerleitung Führungsbereiche in Richtung des Mantels und der gewundenen Bereiche aufweisen.

12. Wärmetauscherleitungssystem nach einer der Definitionen 1 bis 11, dadurch gekennzeichnet, dass das Wärmetauscherleitungssystem mindestens 1 m, vorzugsweise mindestens 2 m, vorzugsweise mindestens 4 m, vorzugsweise mindestens 6 m, vorzugsweise mindestens 8 m, vorzugsweise mindestens 10 m, lang ist.

13. Wärmetauscherleitungssystem nach einer der Definitionen 1 bis 12, dadurch gekennzeichnet, dass die Temperiermittel mindestens entlang 60% der Länge des Wärmetauscherleitungssystems aufgenommen sind.

14. Wärmetauscherleitung nach einer der Definitionen 1 bis 13, dadurch gekennzeichnet, dass sie zusammen mit einer Pumpe zur Führung des viskosen Mediums unter Druck, einem Filter einem Überdruckregulator, einer Verarbeitungsvorrichtung zur Verarbeitung der Polymerlösung, wie Spinnvorrichtungen oder Verstreckungsvorrichtungen, oder Kombinationen davon oder Ähnlichem operativ verbunden ist.

15. Wärmetauscherleitungssystem nach einer der Definitionen 1 bis 14 mit einer Wärmeträgerleitung im Inneren eines Wärmetauschers, wobei im Querschnitt des Wärmetauschers maximal bis zu 40% der Querschnittsinnenfläche durch die Wärmeträgerleitungen eingenommen werden.

16. Wärmetauscher für den Transport von viskosen Fluiden, mit einem äußeren Mantel und einer oder mehreren innenliegenden Wärmeträgerleitungen, insbesondere Kühlmediumleitungen, dadurch gekennzeichnet, dass die innenliegenden Wärmeträgerleitungen Führungsbereiche in Richtung des Mantels und gewundene Bereiche aufweisen, wobei vorzugsweise zwei Wärmeträgerleitungen vorgesehen werden, welche vorzugsweise zur Führung des Wärmeträgermediums in entgegengesetzter Richtung eingerichtet sind.

17. Wärmetauscher nach Definition 16, dadurch gekennzeichnet, dass eine Wärmeträgerleitung an einem endseitigen Bereich mit einer zweiten Wärmeträgerleitung zur Rückführung des Wärmeträgermediums in dieser zweiten Wärmeträgerleitung verbunden ist.

18. Wärmetauscher nach Definition 16 oder 17, dadurch gekennzeichnet, dass die gewundenen Bereiche von mindestens zwei Wärmeträgerleitungen gemeinsam in einem begrenzten Leitungsabschnitt vorliegen.

19. Wärmetauscher nach einer der Definitionen 16 bis 18, dadurch gekennzeichnet, dass die gewundenen Bereiche von mindestens zwei Wärmeträgerleitungen gemeinsam in einem begrenzten Leitungsabschnitt gegeneinander verschränkt vorliegen.

20. Wärmetauscher nach einer der Definitionen 15 bis 19, dadurch gekennzeichnet, dass die gewundenen Bereiche zur Verwirbelung des viskosen Fluids eingerichtet sind.

21. Wärmetauscher nach einer der Definitionen 15 bis 20, dadurch gekennzeichnet, dass der Wärmetauscher mindestens 1 m, vorzugsweise mindestens 2 m, vorzugsweise mindestens 4 m, vorzugsweise mindestens 5 m, lang ist.

22. Wärmetauscher nach einer der Definitionen 15 bis 21, dadurch gekennzeichnet, dass die Wärmeträgerleitungen mindestens entlang 50% der Länge des Wärmetauscher aufgenommen sind.

23. Wärmetauscher nach einer der Definitionen 15 bis 22, dadurch gekennzeichnet, dass er zusammen mit einer Pumpe zur Führung des viskosen Mediums unter Druck operativ verbunden ist.

24. Wärmetauscher nach einer der Definitionen 15 bis 23 mit geringer Wärmeträgerleitungs-Packungsdichte, wobei im Querschnitt des Wärmetauschers maximal bis zu 40% der Querschnittsinnenfläche durch die Wärmeträgerleitungen eingenommen werden.

25. Wärmetauscher nach einer der Definitionen 15 bis 24, dadurch gekennzeichnet, dass die nachfolgenden gewundenen Bereiche der Wärmeträgerleitungen zueinander in Querschnittsaufsicht verdreht oder verwinkelt sind.

26. Wärmetauscherleitungssystem nach einer der Definitionen 1 bis 14 wobei mindestens ein Abschnitt des Systems aus einem Wärmetauscher nach einem der Definitionen 15 bis 25 besteht.

27. Verfahren zum Transport eines viskosen Fluids durch ein Wärmetauscherleitungssystem oder einen Wärmetauscher nach einer der Definitionen 1 bis 26, insbesondere wobei das viskose Fluid thermisch instabil ist, vorzugsweise eine Celluloselösung ist.28.

Verfahren zum Transport eines viskosen Fluids durch ein Wärmetauscherleitungssystem oder einen Wärmetauscher nach einer der Definitionen 1 bis 27, wobei das viskose Fluid thermisch instabil ist, vorzugsweise eine Celluloselösung umfassend oder bestehend aus Cellulose und einem organischen Lösungsmittel ist.

29. Verfahren zum Transport eines viskosen Fluids durch ein Wärmetauscherleitungssystem oder einen Wärmetauscher nach einer der Definitionen 1 bis 28, wobei das viskose Fluid eine Celluloselösung umfassend oder bestehend aus Cellulose, Aminoxid und Wasser ist, vorzugsweise wobei das Aminoxid N-Methyl-Morpholin- N-Oxid ist.

30. Verfahren zum Transport eines viskosen Fluids durch ein Wärmetauscherleitungssystem oder einen Wärmetauscher nach einer der Definitionen 1 bis 26, wobei das viskose Fluid eine Celluloselösung ist und die gelöste Cellulose in Form eines Derivates der Cellulose in der Lösung vorliegt.

31. Verfahren zum Transport eines viskosen Fluids durch ein Wärmetauscherleitungssystem oder einen Wärmetauscher nach einer der Definitionen 1 bis 26, wobei das viskose Fluid eine Biopolymerlösung ist und das gelöste Biopolymer einen biobasierten Kunststoff darstellt.

32. Verfahren zum Transport eines viskosen Fluids durch ein Wärmetauscherleitungssystem oder einen Wärmetauscher nach einer der Definitionen 1 bis 26, wobei das viskose Fluid eine Biopolymerlösung ist und das gelöste Biopolymer in Form von Polysacchariden, Proteinen, Nukleinsäuren vorliegt.

Die vorliegende Erfindung wird weiteres durch die folgenden Figuren und Beispiele illustriert ohne auf diese speziellen Ausführungsformen der Erfindung beschränkt zu sein.

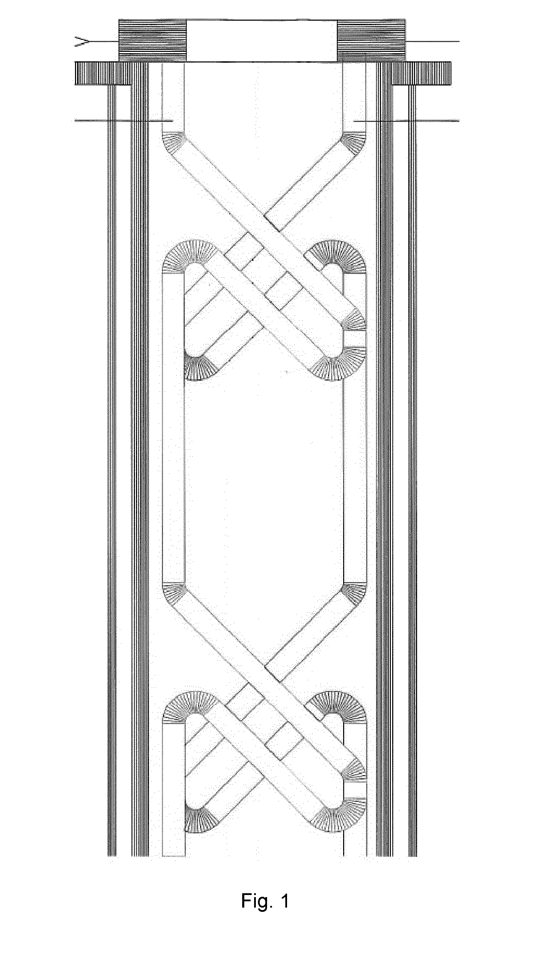

Fig. 1 zeigt einen Längsschnitt durch einen erfindungsgemäßen Wärmetauscher 1 mit einem äußeren Mantel 2 und einem inneren Bereich 3 und innenliegenden Kühlmediumleitungen 4, welche Führungsbereiche 5 in Richtung des Mantels und gewundene Bereiche 6 aufweisen.

Fig. 2 zeigt drei Schnitte durch einen erfindungsgemäßen Wärmetauscher, zwei normale Längsschnitte Fig. 2a und Fig. 2b und einen Querschnitt Fig. 2c mit jeweils zwei gekreuzten Kühlmediumleitungen in einem gewundenen Bereich. Die Kühlmediumleitungen sind durch Verbindungsleitungen 7 miteinander verbunden, sodass das Kühlmedium in jeder zweiten Kühlmediumleitung rückgeführt werden kann. Ebenfalls gezeigt sind ein Kühlmedium-Einlass 8 und -Auslass 9.

Fig. 3 zeigt einen Querschnitt durch einen Wärmetauscher 1 mit jeweils vier gekreuzten Kühlmediumleitungen 4 in einem gewundenen Bereich 6.

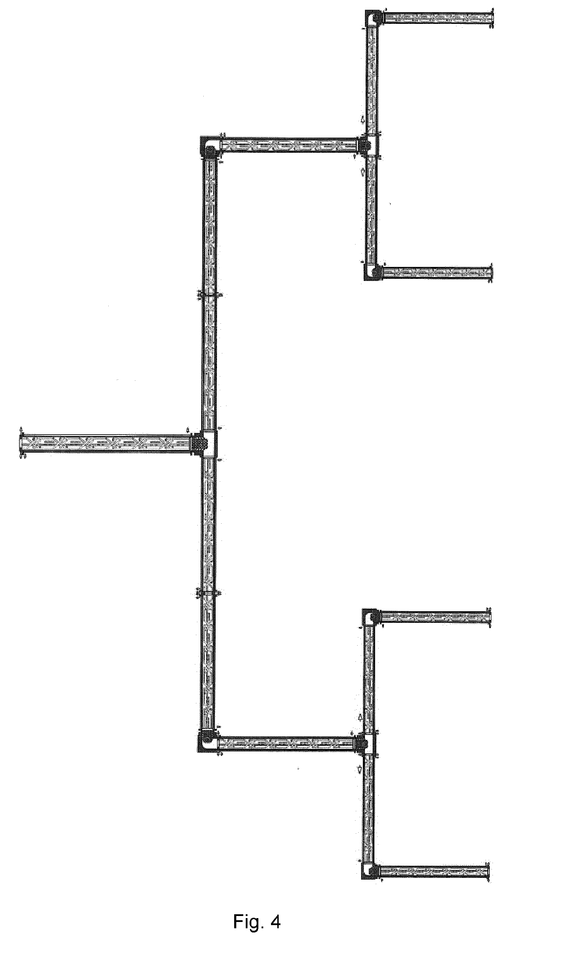

Fig. 4 zeigt eine durch Flußteiler 10 verästelte Wärmetauscherleitung, wobei einzelne Leitungsabschnitte über Krümmteile 11 verbunden sind.

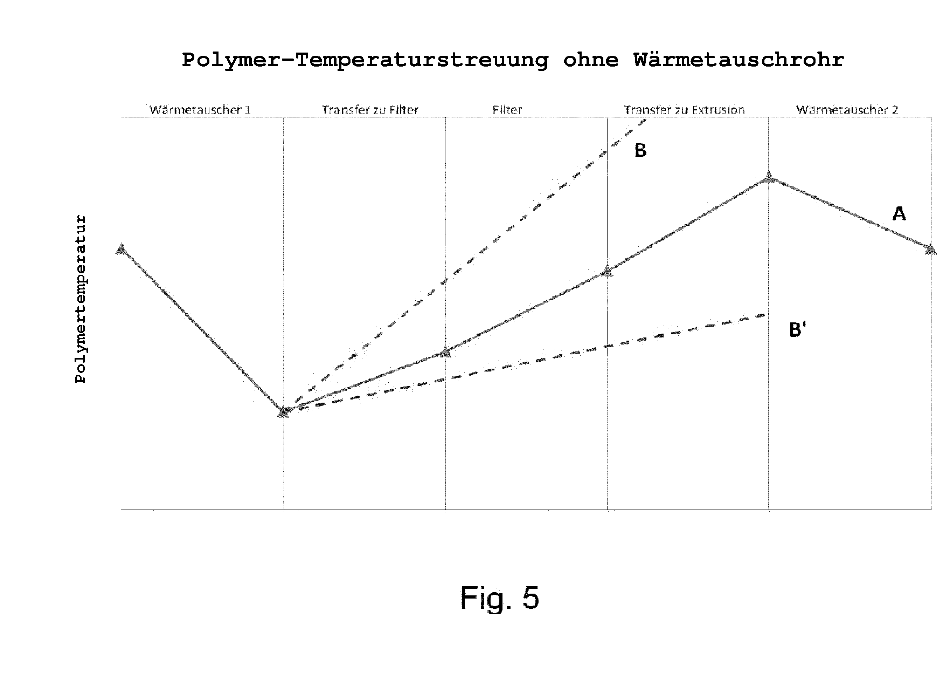

Fig. 5 zeigt einen Vergleich der Temperaturgradienten in einem herkömmlichen Fluidleitungssystem, wie in der WO 94/28213 A1 beschrieben und die erfindungsgemäße Temperaturkontrolle. Der dargestellte Kurvenverlauf (A) beschreibt den gemittelten Temperaturverlauf dermaßen, dass nach der Lösungsherstellung über einen Wärmetauscher die Polymermasse abgekühlt wird, in der Folge in eine Rohrleitung eingespeist und zur Verarbeitung (Extrusion) transportiert wird. Die sich in Folge des Massetransportes, sowie der Filtration und diversen Umlenkungen ergebenden Druckverluste führen dazu, dass über die Reibung Wärme in die Polymermasse eingetragen wird, wodurch insgesamt das Temperaturniveau angehoben wird. Die Kurven B - Rohrmitte - und B' - Rohrwand - stellen eine Analyse der Lehre nach WO 94/28213 A1 dar, wonach nur die Wand eines Rohres gekühlt wird. Es ist ersichtlich, dass die Temperaturinhomogenität mit der Entfernung von der Lösungsherstellung zur Verarbeitung, somit über den Transport in der Rohrleitung zunimmt, was sich in einer Spreizung der beiden Kurven (B) und (B') ausdrücken lässt. Die WO 94/28213 A1 lehrt, dass eine Temperaturspreizung von bis zu 15°C, durch das sich mit Bezug auf das Temperatur und Wärmemanagement selbst überlassene Rohrleitungssystem auftreten kann. Es wird durch die Lehre der WO 94/28213 klar, dass sich durch die zugelassene Temperaturspreizung in der geförderten Polymer-oder Celluloselösung große Viskositätsunterschiede einstellen und aufbauen. Wird diese Temperatur- und Viskositätsinhomogenität nicht beseitigt so kommt es unweigerlich an den nachgeschalteten Verarbeitungspositionen zu Formprodukten zu ungewollten Produktionsfehler, die sich dahingehend auswirken, dass Extrudate während des Verspinnens oder Verstreckung abreißen, sich mit anderen Extrudaten verkleben und dadurch unbrauchbare Endprodukte erzeugt werden.

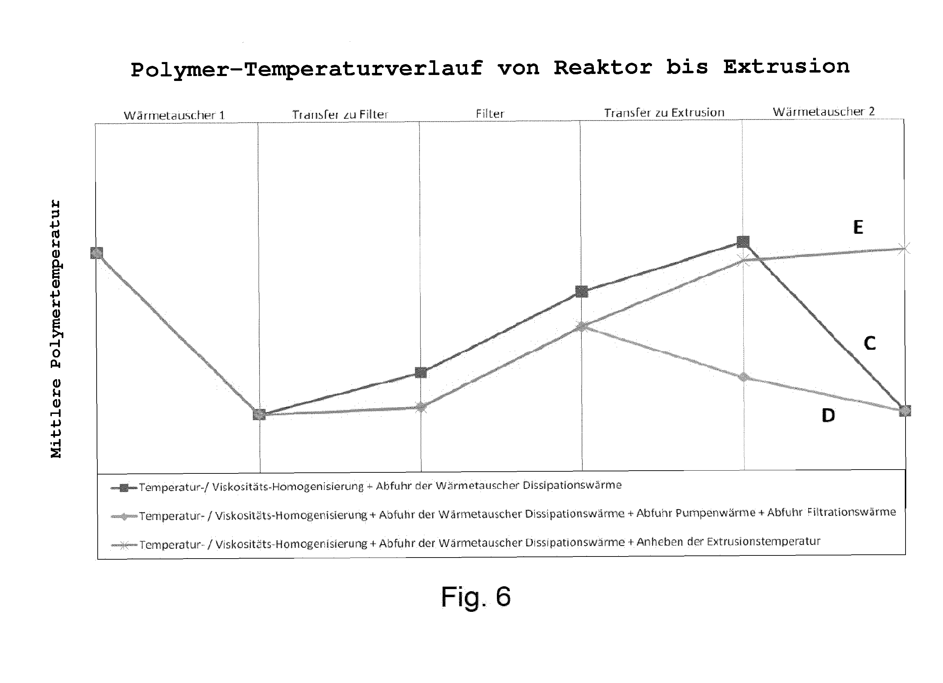

Fig. 6 zeigt den Temperaturverlauf von Celluloselösungen in verschiedenen Anlagenkonfigurationen, wobei 3 verschiedene Temperaturverläufe (C, D, E) dargestellt sind.

(C): Nach der Lösungsherstellung der Cellulose Polymerlösung wird der Transfer der Masse zu einem Filter, das Durchleiten durch den Filter sowie der Weitertransfer zur Verarbeitung zu einem Formkörper (Extrusion) durchgeführt. Im Falle des Kurvenverlaufs C wird nur die Dissipationswärme des Wärmetauschers abgeführt wird.

(D): Nach der Lösungsherstellung der Cellulose Polymerlösung wird der Transfer der Masse zu einem Filter, das Durchleiten durch den Filter sowie der Weitertransfer zur Verarbeitung zu einem Formkörper durchgeführt. Im Falle des Kurvenverlaufs D wird nicht nur die Dissipationswärme des Wärmetauschers abgeführt, welcher hier zur Temperatur- und Viskositätshomogenität beiträgt, sondern auch die Abfuhr der durch Druckerhöhungspumpen, sowie die Erwärmung bedingt durch die Filtration abgeführt wird.

Wie aus Kurve (D) ersichtlich ist, wird eine Temperatur- und Viskositätshomogenisierung über die Transportstrecke, über die gesamte Wärmetauscherleitungsquerschnittsfläche, sowie über das Wärmetauscherleitungsvolumen erreicht. Zusätzlich wird eine Vergleichmäßigung der Massetemperatur über den gesamten Wärmetauscherleitungsverlauf erzielt.

(E): Mit dem erfindungsgemäßen System kann auch die Steuerung der Fluidtemperatur derart vorgenommen werden, dass im Falle einer gewünschten Temperaturerhöhung des Fluids die Wärmetauscherleitung mit Bezug auf Druckverlust so dimensioniert wird, dass die gewünschte Temperaturerhöhung durch Reibungswärme an dem Wärmetauscher eingetragen wird. Bedingt durch die konstruktive Ausführung der Wärmetauscherleitung als indirekt geführter Wärmetauscher kann neben der durch Reibung am Wärmetauscher eingetragenen Wärme noch zusätzlich über ein die Wärmetauscherleitung angespeistes Wärmetauscherfluid Wärme zur Erhöhung der Temperatur der Celluloselösung eingetragen werden.

Fig. 7 zeigt eine Berechnung abzuführender Wärme in Abhängigkeit des Wärmetauscherdurchmessers/-Oberfläche. Zusätzlich sind Auswahlbereiche hinsichtlich der Wärmestromdichte einzelner Wärmetauscher angegeben, wobei optimale Bereiche für unterschiedliche Wärmetauscher

- in Bereich 1: reine Statikmischer im Inneren mit Außentemperierung durch Temperiermittel am Mantel des Wärmetauschers
- in Bereich 2 innentempererierte Rohrstatikmischer
- in Bereich 1, 2 : Bereich in dem Statikmischer oder innentemperierte Rohrstatikmischer, alternativ, liegen. Die Linie "min. Wärmestromdichte" zeigt die abzuführende Mindestwärme um z.B. entstehende Reibungswärme durch das Rohr und den Mischer im Fluidgemisch Cellulose/NMMO/Wasser bei einer Solltemperatur von 95°C auszutragen. Die durchgezogene Linie zeigt die optimal abgeführte Wärmemenge.

Beispiele:

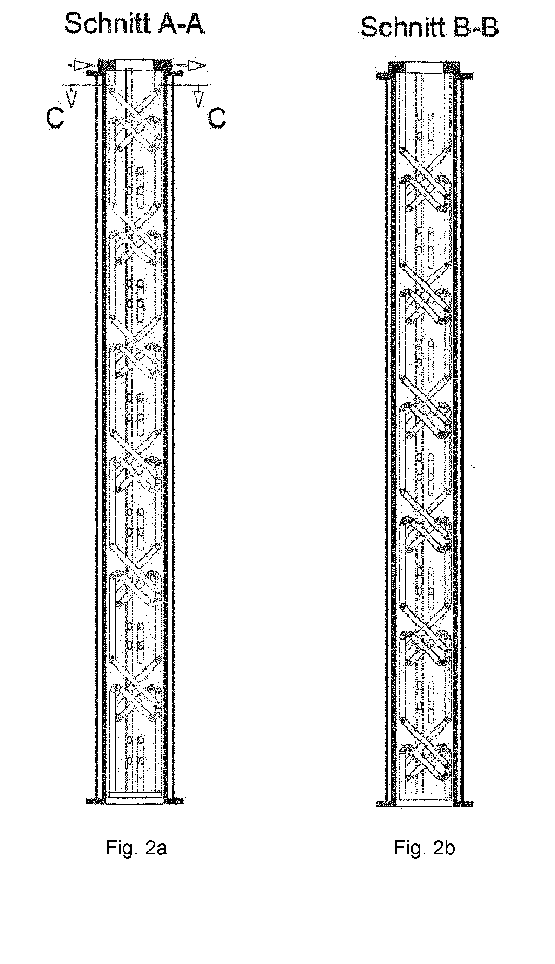

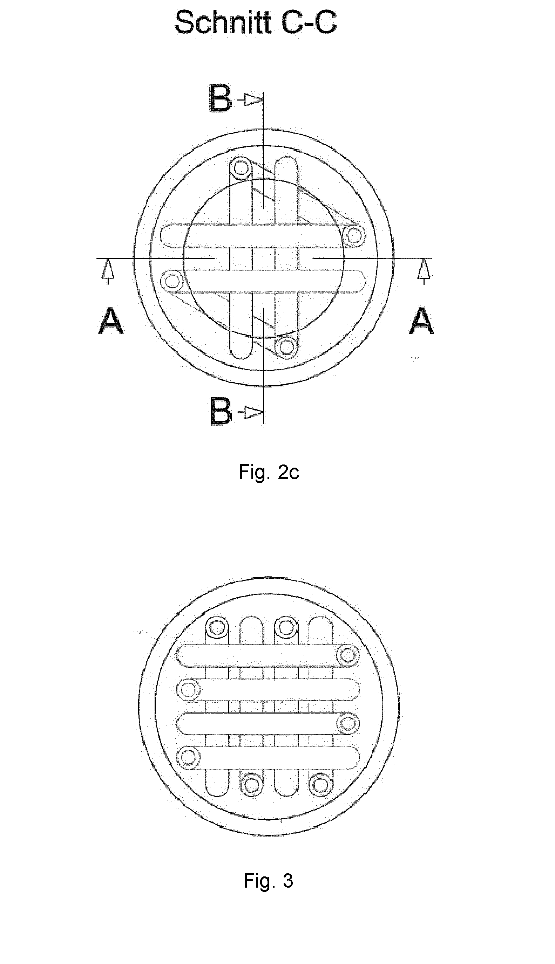

Gemäß diesen Beispielen wird eine Wärmetauscherleitung, wie in Fig. 2 dargestellt, eingesetzt. In dieser Form enthält ein Wärmetauscher vier Kühlmediumleitungen, wobei an einem Ende jeweils zwei zur Rückführung des Kühlmediums verbunden sind. Am andern Ende werden Anschlüsse zum Ein- und Ausführen des Kühlmediums vorgesehen. Das Wärmetauscherinnere ist an beiden Enden offen und ermöglicht den Anschluss weiterer Wärmetauscher oder anderer Elemente, wie Verbindungsstücke, Flußteiler, Filter, Pumpen, Druckbehälter oder Endgeräte, wie Extruder oder Ähnliches. Derartige Verbindungen sind in Fig. 3 dargestellt. Im Inneren des Wärmetauschers werden die Kühlmediumleitungen aufgenommen, wobei jeweils zwei im gleichen Abschnitt gewundene Bereiche mit verkreuzten Leitungsschlingen aufweisen bzw. in Folge in einem weiteren Abschnitt Führungsbereiche in Richtung des Mantels aufweisen. Alternierend wechseln sich diese Bereiche ab. Versetzt dazu ist ein weiteres Paar von Kühlmediumleitungen vorgesehen, welche gegenseitig ebenfalls in gleichen Abschnitten gewundene Bereiche und nicht-gewundene Bereiche aufweisen, wobei in Bezug auf das erste Kühlleitungspaar diese gewundenen und nicht-gewundenen Bereiche gegengleich vorliegen.

Beispiel 1:

Im Betrieb wurde eine Wärmetauscherleitung gemäß Fig. 3 mit einer Cellulose-NMMO-Wasser Lösung getestet. Eine Spinnlösung aus verschiedenen Sulfitzellstoffen (Hersteller MoDo, Sappi Saiccor) zusammengesetzt aus 12,9% Cellulose, 76, 3% Aminoxid (NMMO) und 10, 8% Wasser wurde in einem Löseapparat bei Temperatur zwischen 97°C und 102°C hergestellt.

Die Lösung wies bei einer Dichte von 1200 kg/m$^3$ eine Nullscherviskosität (bei 85°C) von 15.000 Pas auf.

Die so erhaltene Spinnlösung wurde nach der Herstellung in einen mit beheizten innenliegenden Statikmischer-Elementen ausgestatteten Wärmetauscher (Typ: Sulzer SMR) auf eine Temperatur von 95°C eingestellt.

Am Wärmetauscherausgang wurde die Temperatur der ausgetragenen Lösung ermittelt, wobei folgende Temperaturen gemessen wurden:

T1= 95,8°C
T2= 96,7°C
T3= 96,1°C
T4= 95,2°C
T5= 97,1°C

Aus den gemessenen Temperaturen ist ersichtlich, dass eine Temperaturdifferenz von ca. 1,9°C über dem Querschnitt des Wärmetauschers erreicht wurde.

Beispiel 2 - Leerrohrversuch

Im weiteren Verlauf wurde die aus dem Wärmetauscher ausgetragene Celluloselösung in ein Leerrohr mit Innendurchmesser 108 mm (Länge ca. 3 Meter) geleitet.

Zur weiteren Verarbeitung wurde der Spinnlösungsstrom auf 2 Einzelströme mit Leerrohr-Innendurchmesser 80 mm (Länge ca. 2 Meter) aufgeteilt.

Die Leerrohre waren außen mit einem Temperiermantel und darüber mit einer thermischen Isolierung (50 mm Isolierdicke) versehen.

Der Temperiermantel wurde auf einer Temperatur von 82°C gehalten.

Nach der Transportstrecke in den Leerrohren (Länge 5 Meter) wurde an einem der beiden Austritte (65 mm) die Temperaturverteilung der Spinnlösung über dem Querschnitt ermittelt, wobei folgende Temperaturen gemessen wurden: T1= 97,8°C (gemessen in Rohrmitte)

T2= 91,7°C
T3= 83,5°C
T4= 89,2°C
T5= 91,1°C

Aus den gemessenen Temperaturen ist ersichtlich, dass eine Temperaturdifferenz von ca. 14,3°C über dem Querschnitt des Leerrohres erreicht wurde. Auffällig ist, dass trotz der tiefen Manteltemperaturen eine sehr hohe Kerntemperatur gemessen wurde, was sich durch eine ausgeprägte Scherenwärmung des Fluids erklären lässt.

Beispiel 3 - Wärmetauscher mit beheizten innenliegenden Statikmischer- Elementen

Die Erfindung setzt sich zum Ziel, dass trotz Thermostatisierung von außen und Eintrag von Scherwärme die Temperatur- und Viskositätskonstanz der Spinnlösung über den gesamten Rohrleitungsverlauf auf einem gleichmäßigen Niveau gehalten werden muss. Um dies zu erreichen, wurde das oben angeführte Leerrohrsystem durch ein Wärmetauschersystem ersetzt.

Das Wärmetauschersystem besteht aus drei miteinander verbundenen Wärmetauschern.

Der erste Wärmetauscher (Gehäuse Innendurchmesser 108 mm - Länge 3 m) bestand aus einem Gehäuse mit beheizten innenliegenden Statikmischer-Elementen (Typ: Sulzer SMR). Der Temperiermantel des Gehäuses war mit den innenliegenden Statikmischer-Elementen verbunden, wobei die Temperatur des Temperiermediums auf 92°C eingestellt wurde.

Die innenliegenden Statikmischer-Elemente wiesen eine Länge von 2 m (ca. 65% der Gehäuselänge) auf.

Nach dem ersten Wärmetauscherelement wurde die Spinnlösung einer Temperaturmessung unterzogen, wobei sich folgende Temperaturen nach Durchtritt durch den Wärmetauscher einstellten:

T1= 94,8°C
T2= 94,4°C
T3= 95,1C°
T4= 95,6°C
T5= 95,9°C

Aus den gemessenen Temperaturen ist ersichtlich, dass eine Temperaturdifferenz von ca. 1,1°C erreicht wurde. Bemerkenswert ist, dass durch die erfindungsgemäße Ausführung eine sehr gleichmäßige Spinnlösung in Bezug auf Temperatur und Viskositätsverteilung eingestellt werden kann und gleichzeitig die Schererwärmung des Fluids induziert im Wärmetauschersystem abgeführt werden kann.

Beispiel 4 - Wärmetauscher mit innenliegenden Statikmischer-Elementen

Nach Aufteilung des Spinnlösungsstroms wurde die Celluloselösung über 2 parallel geschaltete, baugleiche Wärmetauscher transportiert.

Beide Wärmetauscher (Gehäuse Innendurchmesser 85 mm - Länge 2 m) bestanden aus einem Gehäuse mit innenliegenden Statikmischer-Elementen (Typ: Sulzer SMXL). Der Temperiermantel des Gehäuses war auf eine Temperatur von 90°C eingestellt.

Die innenliegenden Statikmischer-Elemente wiesen eine Länge von 1,2 m (ca. 60% der Gehäuselänge) auf.

Nach einem der beiden Wärmetauscherelemente wurde die Spinnlösung einer Temperaturmessung unterzogen, wobei sich folgende Temperaturen nach Durchtritt durch den Wärmetauscher einstellten:

T1= 95,3°C
T2= 96,7°C
T3= 95,4C°
T4= 96,1°C
T5= 95,5°C

Aus den gemessenen Temperaturen ist ersichtlich, dass eine Temperaturdifferenz von ca. 1,4°C erreicht wurde. Bemerkenswert ist, dass durch die erfindungsgemäße Ausführung eine sehr gleichmäßige Spinnlösung in Bezug auf Temperatur und Viskositätsverteilung eingestellt werden kann und gleichzeitig die Schererwärmung des Fluids im Wärmetauschersystem abgeführt werden kann.

Basierend auf den Daten zur Temperaturspreizung wurden die minimalen und optimalen Wärmetauscherlängen in einem Fluidleitsystem berechnet. Bei einer maximalen Spreizung von 1,5°C eines Cellulose/NMMO/Wasser Fluids bei 95°C ist bei einem System aus 20 einzelnen Wärmetauschern von jeweils 1 m Länge mit gestaffelten Innendurchmessern von 175 mm, 136 mm, 108 mm, 85 mm, und 65 mm, mindestens 34% der Gesamtlänge des Transportsystems, von der ersten Pumpe bis zu einem Extruder, geleitet über einen Filter und eine weitere Pumpe, ein Wärmetauscher. Innerhalb der einzelnen Wärmetauscherelemente ist nicht die gesamte Länge mit einer Wärmeträgerleitung versehen, sondern in Anbetracht von Verbindungsteilen und ggf. unvollständiger Bestückung bei Wärmetauschern mit 175 mm Innendurchmesser 56,9% der Länge, optimalerweise 73,1 % der Länge mit Wärmeträgermittel versehen. In Wärmetauschern mit 136 mm Innendurchmesser sind 69,2% der Länge, optimalerweise 85,8 % der Länge mit Wärmeträgermittel versehen. In Wärmetauschern mit 108 mm Innendurchmesser sind 61,7% der Länge, optimalerweise 86,7 % der Länge mit Wärmeträgermittel versehen. In Wärmetauschern mit 85 mm Innendurchmesser sind 63,6% der Länge, optimalerweise 84,1 % der Länge mit Wärmeträgermittel versehen. In Wärmetauschern mit 65 mm Innendurchmesser sind 50,0% der Länge, optimalerweise 75,0 % der Länge mit Wärmeträgermittel versehen.

Wärmetauscher mit 175 bis 108 mm Innendurchmesser sind innentemperiert, Wärmetauscher mit Innendurchmessern von 85 bis 65 mm außentemperiert mit innenliegenden Statikmischern.

Für die Gesamtlänge des Wärmetauschersystems sind basierend auf der Summe der Längenanteile der Wärmetauscher 61,5% der Länge, optimalerweise 81,0 % der Länge mit Wärmeträgermittel versehen. Bei notwendigen Verteilelementen, Filtern und Pumpen können maximal 97,1% der Länge mit Wärmeträgermittel versehen werden.

Beispiel 5:

Durch ein Wärmetauscherleitungssystem bestehend aus Wärmetauschern und Verbindungsstücken mit Berstelementen (als Verteilstücke) wurde eine Polymerlösung - zur Verwendung als Spinnlösung mit folgender Zusammensetzung von der Spinnlösungsherstellung bis zur Verarbeitung dieser an einer Spinnmaschine transferiert.

Die Spinnmasse bestehend aus einer Mischung von Zellstoffen des Typs MoDo Crown Dissolving-DP 510-550 und Sappi Saiccor DP 560-580 wurden in folgender Zusammensetzung kontinuierlich hergestellt Cellulose 12,9%; Aminoxid (NMMO - N-Methyl-Morpholin-N-Oxid) 76,3 %; Wasser 10,8%.

Die Lösungsherstellung erfolgte nach erfolgter wässriger enzymatischer Vorbehandlung und Suspensionsherstellung durch Abdampfen von überschüssigem Wasser unter Vakuum in einem kontinuierlich durchströmten Reaktionsgefäß bei einer Temperatur von 97 bis 103°C. Zur Stabilisierung des Lösungsmittels NMMO/Wasser wurden bekannte Stabilisatoren zugesetzt. Die Stabilisierung der Celluloselösung erfolgt wie bekannt mit Gallussäurepropylester. Zur sicherheitsgerichteten Lösungsherstellung wird der Schwermetallionengehalt kontrolliert und einen Wert von 10 ppm als Summenparameter (aus Metallionen und Buntmetallionen) nicht überschritten.

Die Dichte der hergestellten Lösung beträgt bei Raumtemperatur 1.200 kg/m$^3$. Die über die Zellstoff Mischungskomponenten eingestellte Nullscherviskosität der Spinnmasse kann, gemessen bei 75°C, bis zu 15.000 Pas betragen. Je nach der im Spinnprozess gewählten Verarbeitungstemperatur kann sich die Nullscherviskosität im Bereich von 500 bis 15.000 Pas bewegen. Bedingt durch das strukturviskose Verhalten der Spinnlösung fällt die Viskosität bei Spinnscherraten je nach gewählter Verarbeitungstemperatur auf einen Bereich von unter 100 Pas ab und ist ebenfalls stark abhängig von der Cellulosekonzentration in der Spinnlösung.

An den Verbindungsstücken wurde an Probenahmeöffnungen während des Durchleitens Polymermasse zur Temperaturmessung und Viskositätsmessung entnommen, wobei die im Verbindungsstück angebrachte Berstscheiben auf einen spezifischen Durchsatz pro mm$^2$ Berstfläche dimensioniert war.

| Probenahmeoffnung über Verteilstück | spez Berstscheibendimensionierung kg Polymermasse / mm2 Berstscheibenflache | Temperatur °C | Temperaturabweichung +/- in °C* | Viskositat $\eta_0$ in Pas bei 90°C | Viskositatsabweichung $\eta_0$ in Pas* bei 90°C +/- |
|---|---|---|---|---|---|
| Reaktor | 0,11 | 101,5 | 2,4 | 1270 | 98 |
| nach Warmetauscher | 0,08 | 96,5 | 0,8 | 2080 | 85 |
| nach Filter | 0,05 | 97,3 | 1,3 | 1550 | 73 |
| nach Pumpe -Verteilung | 0,15 | 95,8 | 0,9 | 2200 | 67 |
| Verteilung-Spinnmaschine | 0,04 | 91,5 | 1,1 | 3650 | 54 |

Abweichungen bzgl. Temperatur und Viskosität wurde über 10 Einzelmessungen und unter der Bildung des Mittelwertes festgestellt.

## Patentansprüche

1. Wärmetauscherleitungssystem für den Transport von viskosen Fluiden mit einer Vielzahl von einzelnen Wärmetauschern als Leitungselemente und mit vorbestimmter kontrollierter Temperatur-und/oder Druckverteilung entlang des Leitungssystems sowie im Querschnitt der Leitungen, **dadurch gekennzeichnet, dass** in regelmäßigen Abständen des Leitungssystems Wärmetauscher als Leitungselemente vorgesehen werden, wobei die regelmäßigen Abstände derart gewählt werden um eine vorbestimmte Temperatur- und/oder Druckverteilung entlang des Leitungssystems einzuhalten, wobei in den Wärmetauschern Temperiermittel zur Temperierung der Fluide vorgesehen sind, sowie optional Mischelemente um je nach Leitungsquerschnitt eine vorgegebene Temperatur- und/oder Druckverteilung im Querschnitt der Leitungen einzuhalten, und wobei mindestens 30% der Länge des Wärmetauscherleitungssystems mit Wärmetauschern bestückt ist.

2. Wärmetauscherleitungssystem nach Anspruch 1, **dadurch gekennzeichnet, dass** mindestens ein Temperiermittel eines Wärmetauschers eine Wärmeträgerleitung oder ein Wärmeträgermantel ist.

3. Wärmetauscherleitungssystem nach Anspruch 1 oder 2 mit einem gestaffelten Innendurchmesser einzelner Wärmetauscher, welcher im Verlauf des Leitungssystems reduziert wird.

4. Wärmetauscherleitungssystem nach einem der Ansprüche 1 bis 3, mit mindestens einem Verzweigungselement.

5. Wärmetauscherleitungssystem nach einem der Ansprüche 1 bis 4 wobei der Innendurchmesser von einem ersten Abschnitt des Wärmetauscherleitungssystems zu einem zweiten Abschnitt maximal 5:1 beträgt, vorzugsweise mindestens 10:9 beträgt.

6. Wärmetauscherleitungssystem nach einem der Ansprüche 1 bis 5, mit einem Wärmetauscher mit einem Temperiermittel im Inneren des Wärmetauschers, vorzugsweise bei einem Innendurchmesser von mindestens 90 mm des Wärmetauschers.

7. Wärmetauscherleitungssystem nach einem der Ansprüche 1 bis 6, mit einem Wärmetauscher mit einem Temperiermittel außerhalb des Innenraums des Wärmetauschers, vorzugsweise einem Temperiermantel, wobei vorzugsweise der Innendurchmesser des Wärmetauschers maximal 130 mm beträgt.

8. Wärmetauscherleitungssystem nach einem der Ansprüche 1 bis 7, **dadurch gekennzeichnet, dass** die vorbestimmten Temperaturunterschiede im Querschnitt und/oder in Längsrichtung des Wärmetauschersystems maximal 5°C betragen.

9. Wärmetauscherleitungssystem nach einem der Ansprüche 1 bis 7 enthaltend Mischelemente im Innenraum zumindest eines Leitungsabschnitts.

10. Wärmetauscherleitungssystem nach Anspruch 6 und 9, wobei das Mischelement und Temperiermittel eine Wärmeträgerleitung im Inneren des Wärmetauschers ist.

11. Wärmetauscherleitungssystem nach Anspruch 10, **dadurch gekennzeichnet, dass** die innenliegende Wärmeträgerleitung Führungsbereiche in Richtung des Mantels und gewundene Bereiche aufweisen.

12. Wärmetauscherleitungssystem nach einem der Ansprüche 1 bis 11, **dadurch gekennzeichnet, dass** das Wärmetauscherleitungssystem mindestens 1 m, vorzugsweise mindestens 2 m, vorzugsweise mindestens 4 m, vorzugsweise mindestens 6 m, vorzugsweise mindestens 8 m, vorzugsweise mindestens 10 m, lang ist.

13. Wärmetauscherleitungssystem nach einem der Ansprüche 1 bis 12, **dadurch gekennzeichnet, dass** die Temperiermittel mindestens entlang 60% der Länge des Wärmetauscherleitungssystems aufgenommen sind.

14. Wärmetauscherleitungssystem nach einem der Ansprüche 1 bis 13, **dadurch gekennzeichnet, dass** sie zusammen mit einer Pumpe zur Führung des viskosen Mediums unter Druck, einem Filter einem Überdruckregulator oder Kombinationen davon operativ verbunden ist.

**15.** Wärmetauscherleitungssystem nach einem der Ansprüche 1 bis 14 mit einer Wärmeträgerleitung im Inneren eines Wärmetauschers, wobei im Querschnitt des Wärmetauschers maximal bis zu 40% der Querschnittsinnenfläche durch die Wärmeträgerleitungen eingenommen werden.

**16.** Verfahren zum Transport eines viskosen Fluids durch ein Wärmetauscherleitungssystem nach einem der Ansprüche 1 bis 15, insbesondere wobei das viskose Fluid thermisch instabil ist, vorzugsweise eine Cellulose-Lösung ist, und/oder eine Biopolymerlösung, vorzugsweise ausgewählt aus Polysacchariden, Proteinen, Nukleinsäuren oder Mischungen davon, ist.

Fig. 1

Schnitt A-A
C
C

Fig. 2a

Schnitt B-B

Fig. 2b

Schnitt C-C
B
A
A
B

Fig. 2c

Fig. 3

Fig. 4

Polymer-Temperaturstreuung ohne Wärmetauschrohr
Wärmetauscher 1
Transfer zu Filter
Filter
Transfer zu Extrusion
Wärmetauscher 2
A
B
B'
Polymertemperatur

Fig. 5

Polymer-Temperaturverlauf von Reaktor bis Extrusion
Wärmetauscher 1
Transfer zu Filter
Filter
Transfer zu Extrusion
Wärmetauscher 2
E
C
D
Temperatur-/ Viskositäts-Homogenisierung + Abfuhr der Wärmetauscher Dissipationswärme
Temperatur- / Viskositäts-Homogenisierung + Abfuhr der Wärmetauscher Dissipationswärme + Abfuhr Pumpenwärme + Abfuhr Filtrationswärme
Temperatur- / Viskositäts-Homogenisierung + Abfuhr der Wärmetauscher Dissipationswärme + Anheben der Extrusionstemperatur
Mittlere Polymertemperatur


Fig. 6

1
1, 2
2
250,00
200,00
150,00
100,00
50,00
-
Wärmestromdichte [KW / m³]
80,00
70,00
60,00
50,00
40,00
30,00
20,00
10,00
-
Wärmetauschergehäuse - Verhältnis Oberfläche / Volumen
Min. Wärmestromdichte
Oberfläche / Volumen
50
70
90
110
130
150
170
190
210
230
250
Wärmetauschergehäuse - Innendurchmesser [mm]

Fig. 7

Europäisches Patentamt
European Patent Office
Office européen des brevets

## EUROPÄISCHER RECHERCHENBERICHT

Nummer der Anmeldung
EP 11 17 9852

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2009/304890 A1 (NI XIONGWEI [GB] ET AL) 10. Dezember 2009 (2009-12-10) | 1,2,4,5, 7-9, 12-14,16 | INV. F28D7/00 F28D7/08 F28F13/08 |
| Y | * Absätze [0001], [0002], [0066] - [0088]; Abbildungen 1,2 * | 6,10,11, 15 | ADD. F28D7/02 F28D7/10 |
| Y | US 2009/165994 A1 (BUCHER PATRICK [CH] ET AL) 2. Juli 2009 (2009-07-02) * das ganze Dokument * | 6,10,11, 15 | |
| X | US 4 110 521 A (BARNETT RICHARD EARL ET AL) 29. August 1978 (1978-08-29) | 1,2,5, 7-9,12, 13,16 | |
| Y | * das ganze Dokument * | 6,10,11, 15 | |
| Y | US 5 046 548 A (TILLY LEIF [SE]) 10. September 1991 (1991-09-10) * das ganze Dokument * | 6,10,11, 15 | |
| X | WO 2009/122143 A2 (JOHNSON MATTHEY PLC [GB]; CAMPBELL GRAEME DOUGLAS [GB]; CAMPBELL FIONA) 8. Oktober 2009 (2009-10-08) * Seite 4, Zeile 20 - Seite 8, Zeile 16; Abbildung 1 * | 1,2,5, 7-9, 12-14,16 | RECHERCHIERTE SACHGEBIETE (IPC): F28D F28F D01D C08B |
| X | WO 2005/119154 A1 (HATCH ASSOCIATES PTY LTD [AU]; DE BOER DIRK JACOB [AU]) 15. Dezember 2005 (2005-12-15) * Seite 1, Zeilen 1-6 * * Seite 5, Zeile 17 - Seite 13, Zeile 29; Abbildungen 1-4 * | 1,2,4-6, 12,13, 15,16 | |
| A | US 2009/117218 A1 (NIISHIMURA TAKURO [JP] ET AL) 7. Mai 2009 (2009-05-07) * Absätze [0023] - [0033], [0126] - [0129]; Abbildungen 1-3 * | 8 | |
| | -/-- | | |

Der vorliegende Recherchenbericht wurde für alle Patentansprüche erstellt

1

| Recherchenort | Abschlußdatum der Recherche | Prüfer |
|---|---|---|
| München | 1. Februar 2012 | Leclaire, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## EUROPÄISCHER RECHERCHENBERICHT

Nummer der Anmeldung
EP 11 17 9852

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| A | DE 10 2009 043788 A1 (WOLF PETER [DE]; JASKE WOLFGANG [DE]) 31. März 2011 (2011-03-31) * das ganze Dokument * | 1,2,6, 13-16 | |
| A | DE 102 41 276 A1 (ZENTES UNITEX GMBH [DE]) 18. März 2004 (2004-03-18) * Absätze [0001] - [0007]; Abbildung 1 * | 1-3 | |
| A | FR 1 383 810 A (RHODIACETA) 4. Januar 1965 (1965-01-04) * das ganze Dokument * | 1-3 | |
| A | EP 1 350 560 A1 (METHANOL CASALE SA [CH]) 8. Oktober 2003 (2003-10-08) * Zusammenfassung; Abbildungen 1-4 * | 3 | |
| | | | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 1. Februar 2012 | Leclaire, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

1

## ANHANG ZUM EUROPÄISCHEN RECHERCHENBERICHT ÜBER DIE EUROPÄISCHE PATENTANMELDUNG NR. EP 11 17 9852

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-02-2012

| Im Recherchenbericht angeführtes Patentdokument | Datum der Veröffentlichung | Mitglied(er) der Patentfamilie | Datum der Veröffentlichung |
|---|---|---|---|
| US 2009304890 A1 | 10-12-2009 | BR PI0618712 A2 | 06-09-2011 |
| | | CA 2630457 A1 | 31-05-2007 |
| | | CN 101312783 A | 26-11-2008 |
| | | EP 1965900 A1 | 10-09-2008 |
| | | US 2009304890 A1 | 10-12-2009 |
| | | WO 2007060412 A1 | 31-05-2007 |
| US 2009165994 A1 | 02-07-2009 | CA 2660177 A1 | 14-02-2008 |
| | | CN 101506609 A | 12-08-2009 |
| | | EP 2052199 A1 | 29-04-2009 |
| | | JP 2010500526 A | 07-01-2010 |
| | | KR 20090048446 A | 13-05-2009 |
| | | RU 2009108295 A | 20-09-2010 |
| | | TW 200824785 A | 16-06-2008 |
| | | US 2009165994 A1 | 02-07-2009 |
| | | WO 2008017571 A1 | 14-02-2008 |
| US 4110521 A | 29-08-1978 | KEINE | |
| US 5046548 A | 10-09-1991 | AT 73006 T | 15-03-1992 |
| | | AU 611230 B2 | 06-06-1991 |
| | | BR 8807757 A | 07-08-1990 |
| | | DK 97390 A | 19-04-1990 |
| | | EP 0371079 A1 | 06-06-1990 |
| | | ES 2013351 A6 | 01-05-1990 |
| | | FI 90730 B | 15-12-1993 |
| | | HU 203052 B | 28-05-1991 |
| | | JP H03502069 A | 16-05-1991 |
| | | NO 901752 A | 20-04-1990 |
| | | RO 107205 B1 | 30-10-1993 |
| | | SE 457330 B | 19-12-1988 |
| | | US 5046548 A | 10-09-1991 |
| | | WO 8903723 A1 | 05-05-1989 |
| WO 2009122143 A2 | 08-10-2009 | KEINE | |
| WO 2005119154 A1 | 15-12-2005 | KEINE | |
| US 2009117218 A1 | 07-05-2009 | CN 101010179 A | 01-08-2007 |
| | | US 2009117218 A1 | 07-05-2009 |
| | | WO 2006013909 A1 | 09-02-2006 |
| DE 102009043788 A1 | 31-03-2011 | KEINE | |
| DE 10241276 A1 | 18-03-2004 | KEINE | |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR. EP 11 17 9852

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-02-2012

| Im Recherchenbericht angeführtes Patentdokument | | Datum der Veröffentlichung | Mitglied(er) der Patentfamilie | | | Datum der Veröffentlichung |
|---|---|---|---|---|---|---|
| FR 1383810 | A | 04-01-1965 | KEINE | | | |
| EP 1350560 | A1 | 08-10-2003 | AR | 039217 | A1 | 09-02-2005 |
| | | | AT | 518587 | T | 15-08-2011 |
| | | | AU | 2003223977 | A1 | 20-10-2003 |
| | | | CN | 1646213 | A | 27-07-2005 |
| | | | DK | 1492616 | T3 | 14-11-2011 |
| | | | EG | 23494 | A | 03-01-2006 |
| | | | EP | 1350560 | A1 | 08-10-2003 |
| | | | EP | 1492616 | A1 | 05-01-2005 |
| | | | JP | 2005521555 | A | 21-07-2005 |
| | | | US | 2004071606 | A1 | 15-04-2004 |
| | | | WO | 03084655 | A1 | 16-10-2003 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20090321975 A
- EP 096201 A1
- US 7841765 B
- WO 2009000642 A
- WO 9428213 A1
- DE 10024540
- US 6241113 B
- US 3845879 A
- US 20080202595 A
- EP 1591703 A
- US 7870865 B
- US 4079854 A
- US 3872874 A
- WO 2005054731 A
- EP 789822 A
- US 5337776 A
- WO 9428213 A


### In der Beschreibung aufgeführte Nicht-Patentliteratur


- Structure Formation of Regenerated Cellulose Materials from NMMO-Solutions. *Prog. Polym. Sci.,* 2001, vol. 26, 1473-1524
- Rheology of Concentrated N-Methylmorpholine-N-Oxide Cellulose Solutions. *Polymer Science, Ser. A,* 1997, vol. 39 (9), 1033-1040